(19) Europäisches Patentamt
European Patent Office
Office européen des brevets

(11) **EP 0 996 676 B1**

(12) **FASCICULE DE BREVET EUROPEEN**

(45) Date de publication et mention de la délivrance du brevet:
**12.06.2002 Bulletin 2002/24**

(21) Numéro de dépôt: **98939630.4**

(22) Date de dépôt: **10.07.1998**

(51) Int Cl.[7]: **C08L 21/00**, C08K 3/36, C08G 77/392, B60C 1/00

(86) Numéro de dépôt international:
**PCT/EP98/04308**

(87) Numéro de publication internationale:
**WO 99/02602 (21.01.1999 Gazette 1999/03)**

(54) **COMPOSITION DE CAOUTCHOUC DIENIQUE RENFORCEE D'UNE CHARGE BLANCHE, COMPORTANT A TITRE D'AGENT DE COUPLAGE (CHARGE BLANCHE/ELASTOMERE) UN POLYORGANOSILOXANE MULTIFONCTIONNALISE**

MIT EINEM WEISSEN FÜLLSTOFF VERSTÄRKTE DIENKAUTSCHUKMISCHUNG DIE ALS KUPPLUNGSMITTEL (WEISSER FÜLLSTOFF/ELASTOMER) EIN MULTIFUNKTIONNELLES ORGANOPOLYSILOXAN ENTHÄLT

DIENE RUBBER COMPOSITION REINFORCED WITH WHITE FILLER, COMPRISING AS COUPLING AGENT (WHITE FILLER/ELASTOMER) A MULTIFUNCTIONALIZED POLYORGANOSILOXANE

(84) Etats contractants désignés:
**DE ES FR GB IT**

(30) Priorité: **11.07.1997 FR 9709047**
**04.02.1998 FR 9801452**

(43) Date de publication de la demande:
**03.05.2000 Bulletin 2000/18**

(73) Titulaire: **COMPAGNIE GENERALE DES ETABLISSEMENTS MICHELIN-MICHELIN & CIE**
**63040 Clermont-Ferrand Cédex (FR)**

(72) Inventeurs:
- **CHIRON, Frédéric**
  **F-63100 Clermont-Ferrand (FR)**
- **LAFORET, Claude**
  **F-63000 Clermont-Ferrand (FR)**
- **MANGERET, Jean-Luc**
  **F-63200 Riom (FR)**

(74) Mandataire: **Ribière, Joel**
**Michelin & Cie**
**Service SGD/LG/PI-LAD**
**63040 Clermont-Ferrand Cedex 09 (FR)**

(56) Documents cités:
**FR-A- 2 094 859** **US-A- 4 753 976**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 996 676 B1

Printed by Jouve, 75001 PARIS (FR)

## Description

La présente invention est relative aux compositions de caoutchoucs diéniques vulcanisables au soufre et destinées à la fabrication d'enveloppes de pneumatiques ou de produits semi-finis pour enveloppes de pneumatiques, en particulier de bandes de roulement de ces enveloppes.

Elle se rapporte plus particulièrement à de nouvelles compositions de caoutchoucs diéniques renforcées d'une charge blanche et comportant un agent de couplage (charge blanche /élastomère) à base d'un polyorganosiloxane (en abrégé POS) multifonctionnalisé porteur à la fois de fonctions alkoxyles et mercapto-alkyles (ou alkyl-thiols).

Les POS (multi)fonctionnalisés sont largement connus et ont été décrits dans un grand nombre de documents ; on citera en particulier la demande de brevet WO96/16125 qui décrit la multifonctionnalisation de POS. Ce document divulgue la préparation de POS comprenant notamment des motifs fonctionnels ≡Si-(O-alkyle) et des motifs fonctionnels ≡Si-(chaîne à différents groupements soufrés, notamment SH). La fonction -(O-alkyle) est introduite sur un polyhydrogéno-organosiloxane approprié par une réaction de déshydrogéno-condensation à partir de l'alcool dont dérive la fonction -(O-alkyle) (dans cette étape une fraction des groupements ≡SiH de départ se trouve substituée par des fonctions alkoxyles), puis la fonction -(chaîne à différents groupements soufrés) est introduite par hydrosilylation d'une oléfine portant le groupement soufré, par les groupements ≡SiH restants.

Depuis que les économies de carburant et la nécessité de protéger l'environnement sont devenues une priorité, il est souhaitable de produire des élastomères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que par exemple des sous-couches, des gommes de calandrage ou de flancs ou des bandes de roulement et obtenir des pneumatiques aux propriétés améliorées, notamment possédant une résistance au roulement réduite.

Pour atteindre un tel objectif de nombreuses solutions ont été proposées, tout d'abord essentiellement concentrées sur l'utilisation d'élastomères modifiés au moyen d'agents tels que des agents de couplage, d'étoilage ou de fonctionnalisation, avec du noir de carbone comme charge renforçante, dans le but d'obtenir une bonne interaction entre l'élastomère modifié et le noir de carbone. On sait en effet, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans l'élastomère.

De manière tout à fait connue, le noir de carbone présente de telles aptitudes, ce qui n'est en général pas le cas des charges blanches. Pour des raisons d'affinités réciproques, les particules de charge blanche, en particulier de silice, ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge blanche/élastomère) susceptibles d'être créées pendant l'opération de mélange, étaient effectivement obtenues ; ces interactions tendent d'autre part à augmenter la consistance des compositions caoutchouteuses et donc à rendre leur mise en oeuvre, à l'état cru, plus difficile qu'en présence de noir de carbone.

L'intérêt pour les compositions renforcées de charge(s) blanche(s) a été cependant fortement relancé avec la publication de la demande de brevet européen EP-A-0 501 227 qui divulgue une composition de caoutchouc diénique vulcanisable au soufre, renforcée d'une silice précipitée particulière du type hautement dispersible, qui permet de fabriquer un pneumatique ou une bande de roulement ayant une résistance au roulement nettement améliorée, sans affecter les autres propriétés en particulier celles d'adhérence, d'endurance et de résistance à l'usure.

La demande de brevet européen EP-A-0 810 258, publiée récemment, divulgue quant à elle une nouvelle composition de caoutchouc diénique renforcée d'une autre charge blanche particulière, en l'occurrence une alumine ($Al_2O_3$) spécifique à dispersibilité élevée, qui permet elle aussi l'obtention de pneumatiques ou de bandes de roulement ayant un tel excellent compromis de propriétés contradictoires.

L'utilisation de ces silices ou alumines spécifiques, hautement dispersibles, à titre de charge renforçante majoritaire ou non, a certes réduit les difficultés de mise en oeuvre des compositions les contenant, mais cette mise en oeuvre reste néanmoins plus difficile que pour les compositions chargées conventionnellement de noir de carbone.

En particulier, il est nécessaire d'utiliser un agent de couplage, encore appelé agent de liaison, qui a pour fonction d'assurer la connexion entre la surface des particules de charge blanche et l'élastomère, tout en facilitant la dispersion de cette charge blanche au sein de la matrice élastomérique.

Par agent de "couplage" (charge blanche/élastomère), on entend de manière connue de l'homme du métier un agent apte à établir une connexion suffisante, de nature chimique et/ou physique, entre la charge blanche et l'élastomère ; un tel agent de couplage, au moins bifonctionnel, a par exemple comme formule générale simplifiée « Y-T-X », dans laquelle:

- Y représente un groupe fonctionnel (fonction "Y") qui est capable de se lier physiquement et/ou chimiquement à la charge blanche, une telle liaison pouvant être établie, par exemple, entre un atome de silicium de l'agent de couplage et les groupes hydroxyle (OH) de surface de la charge blanche (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe hydrocarboné permettant de relier Y et X.

Les agents de couplage ne doivent en particulier pas être confondus avec de simples agents de recouvrement de charge blanche, notamment de silice, qui de manière connue comportent la fonction Y active vis-à-vis de la charge blanche mais sont dépourvus de la fonction X active vis-à-vis de l'élastomère.

Des agents de couplage silice/élastomère, notamment, ont été décrits dans un grand nombre de documents, les plus connus étant des organosilanes bifonctionnels.

Ainsi il a été proposé dans la demande de brevet FR-A-2 094 859 d'utiliser un mercaptosilane pour la fabrication de bandes de roulement de pneumatiques. Il fut rapidement mis en évidence et il est aujourd'hui bien connu que les mercaptosilanes, et en particulier le γ-mercaptopropyltriméthoxysilane et le γ-mercaptopropyltriéthoxysilane, sont susceptibles de procurer de meilleures propriétés de couplage silice/élastomère, mais que l'utilisation industrielle de ces agents de couplage n'est pas possible en raison de la forte réactivité des fonctions -SH conduisant très rapidement au cours de la préparation de la composition dans un mélangeur interne à des vulcanisations prématurées, appelées encore "grillage" ("scorching"), à des plasticités Mooney très élevées, en fin de compte à des compositions quasi-impossibles à travailler et à mettre en oeuvre industriellement. Pour illustrer cette impossibilité d'utiliser industriellement de tels agents de couplage porteurs de fonctions -SH, et les compositions les contenant, on peut citer la demande de brevet FR-A-2 206 330 ainsi que le brevet US-A-4 002 594.

Pour remédier à cet inconvénient, il a été proposé de remplacer ces mercaptosilanes par des organosilanes polysulfurés (voir par exemple FR-A-2 206 330). Parmi ces composés le tétrasulfure de bis 3-triéthoxysilylpropyle (en abrégé TESPT), en particulier, est considéré aujourd'hui comme le produit apportant, pour des vulcanisats chargés à la silice, le meilleur compromis en terme de sécurité au grillage, de facilité de mise en oeuvre et de pouvoir renforçant.

Cependant, cet agent de couplage est fort onéreux et doit être utilisé en une quantité importante, de l'ordre de 2 à 3 fois plus que la quantité de γ-mercaptopropyltriméthoxysilane nécessaire pour obtenir des niveaux de propriétés de couplage équivalentes.

Il était donc souhaitable, notamment pour abaisser le coût global des formulations, de pouvoir élaborer industriellement des compositions de caoutchouc renforcées de silice, ou plus généralement d'une charge blanche renforçante, comprenant des agents de couplage à des taux plus faibles que ceux employés pour les organosilanes polysulfurés, ces agents étant en outre aussi performants que les mercaptosilanes, tout en évitant un grillage prématuré et des problèmes de mise en oeuvre liés à une viscosité trop importante des compositions.

La Demanderesse à découvert lors de ses recherches que des composés POS particuliers. multifonctionnalisés alkoxy et mercapto-alkyl, répondent de manière inattendue à l'ensemble des exigences ci-dessus.

Des POS (multi)fonctionnalisés ont certes déjà été décrits dans des compositions de caoutchoucs diéniques, destinées notamment à la fabrication d'enveloppes de pneumatiques ; on se reportera notamment aux documents EP-A-0 731 133, EP-A-0 761 748, WO96/29364 qui décrivent des POS fonctionnalisés par des groupes polaires (en particulier des groupes hydroxyles et/ou des groupes alkoxyles) et éventuellement par des groupes organiques comme par exemple de longues chaînes alkyles, le reste (cyclohexène-3-yl)-2-éthyle ou le reste (méthyl-4-cyclohexène-3-yl)-2-propyle. Toutefois, de tels POS ne peuvent remplir au mieux qu'une fonction simple d'agent de recouvrement de la silice (fonction Y), mais pas celle d'un agent de couplage (pas de fonction X disponible) ; ils sont d'ailleurs toujours associés, dans les compositions décrites, à des organosilanes sulfurés du type de ceux mentionnés précédemment.

L'utilisation de POS multifonctionnalisés porteurs à la fois de fonctions alkoxyles et de fonctions thiols -SH, comme agents de couplage (charge blanche/élastomère) dans des compositions de caoutchouc diénique destinées à la fabrication d'enveloppes de pneumatiques, est d'autant plus inattendue que les problèmes connus de grillage rencontrés avec les mercaptosilanes, porteurs de fonctions -SH à titre de fonction "X", éloignaient au contraire l'homme du métier de l'utilisation de fonctions thiols dans de telles compositions.

En conséquence, un premier objet de l'invention consiste en une composition de caoutchouc vulcanisable au soufre et destinée à la fabrication d'enveloppes de pneumatiques comportant au moins un élastomère diénique, une charge blanche à titre de charge renforçante, un agent de couplage (charge blanche/élastomère) porteur d'au moins deux fonctions Y et X, greffable d'une part sur la charge blanche au moyen de la fonction Y et d'autre part sur l'élastomère au moyen de la fonction X, cette composition étant caractérisée en ce que ledit agent de couplage consiste en un polyorganosiloxane (POS) multifonctionnalisé comportant par molécule:

α) - d'une part au moins un premier motif siloxyle porteur sur l'atome de silicium d'au moins un radical (i) alkoxyle

(fonction Y), linéaire ou ramifié, choisi parmi les alkoxyles en $C_1$ à $C_{15}$; et

β) - d'autre part au moins un second motif siloxyle porteur sur l'atome de silicium d'au moins un radical (2i) de formule générale Z-SH (fonction X), Z étant un groupement de liaison divalent, linéaire ou ramifié, comportant de préférence de 2 à 30 atomes de carbone.

Les compositions conformes à l'invention présentent notamment l'intérêt d'offrir une alternative avantageuse à l'emploi d'organosilanes polysulfurés, notamment du TESPT, tout en permettant une réduction sensible du taux d'agent de couplage par rapport aux compositions conventionnelles comportant de tels organosilanes ; le coût global de la formulation est ainsi abaissé.

L'invention a également pour objet l'utilisation d'une composition de caoutchouc conforme à l'invention pour la fabrication de pneumatiques ou pour la fabrication d'articles en caoutchouc destinés à de tels pneumatiques, ces articles étant choisis en particulier dans le groupe constitué par les bandes de roulement, les sous-couches destinées par exemple à être placées sous ces bandes de roulement. les flancs, les talons, les protecteurs, les chambres à air ou les gommes intérieures étanches pour pneu sans chambre.

L'invention a également pour objet ces pneumatiques et ces articles en caoutchouc eux-mêmes lorsqu'ils comportent une composition de caoutchouc conforme à l'invention.

L'invention a aussi pour objet un procédé pour assurer le couplage (charge blanche /élastomère) dans les compositions de caoutchouc diénique renforcées d'une charge blanche et destinées à la fabrication de pneumatiques, ce procédé étant caractérisé en ce qu'on incorpore par mélangeage à ladite composition, avant sa vulcanisation, un POS répondant à la définition précédente.

L'invention a enfin pour objet l'utilisation d'un POS tel que défini ci-dessus comme agent de couplage (charge blanche/élastomère) dans les compositions de caoutchouc diénique renforcées d'une charge blanche et destinées à la fabrication d'enveloppes de pneumatiques.

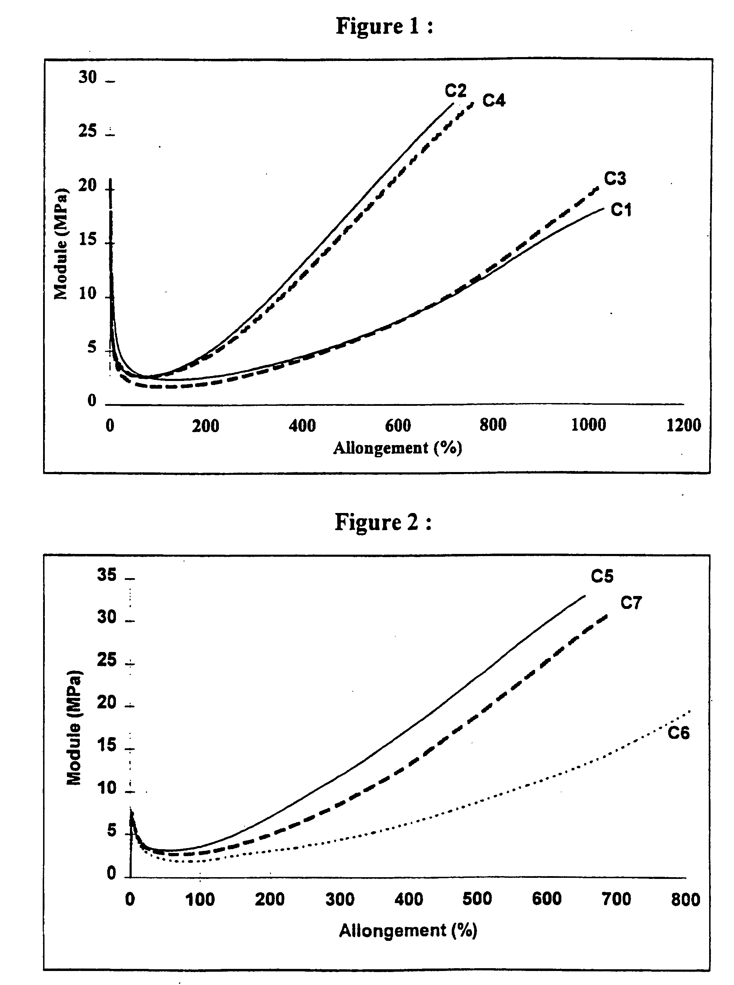

L'invention ainsi que ses avantages seront aisément compris à la lumière de la description et des exemples de réalisation qui suivent, ainsi que des figures 1 et 2 relatives à ces exemples qui représentent des courbes de variation de module en fonction de l'allongement pour différentes compositions de caoutchouc diénique, conformes ou non à l'invention.

## I. MESURES ET TESTS UTILISES

Les compositions de caoutchouterie sont caractérisées avant et après cuisson, comme indiqué ci-après.

### I-1. Plasticité Mooney

On utilise un consistomètre oscillant tel que décrit dans la norme AFNOR-NF-T-43-005 (Novembre 1980). La mesure de plasticité Mooney se fait selon le principe suivant : le mélange cru est moulé dans une enceinte cylindrique chauffée à 100°C. Après une minute de préchauffage, le rotor tourne au sein de l'éprouvette à 2 tours / minute et on mesure le couple utile pour entretenir ce mouvement après 4 minutes de rotation. La plasticité Mooney est exprimée en "unités Mooney" (UM ; avec 1 UM = 0,83 Newton.mètre).

### I-2 Temps de grillage

Les mesures sont effectuées à 130°C, conformément à la norme AFNOR-NF-T43-005 (Novembre 1980). L'évolution de l'indice consistométrique en fonction du temps permet de déterminer le temps de grillage des compositions de caoutchouc, apprécié conformément à la norme précitée par le paramètre T5, exprimé en minutes, et défini comme étant le temps nécessaire pour obtenir une augmentation de la valeur de l'indice consistométrique (exprimé en "unité Mooney") de 5 unités au dessus de la valeur minimale mesurée pour cet indice.

### I-3. Essais de traction

Ces essais permettent de déterminer les contraintes d'élasticité et les propriétés à la rupture ; sauf indication contraire, ils sont effectués conformément à la norme AFNOR-NF-T46-002 de septembre 1988.

On mesure en seconde élongation (i.e. après un cycle d'accomodation) les modules sécants à 10 % d'allongement (M10), 100 % d'allongement (M100) et 300 % d'allongement (M300). On mesure également les contraintes à la rupture et les allongements à la rupture. Toutes ces mesures de traction sont effectuées dans les conditions normales de température et d'hygrométrie selon la norme AFNOR-NF-T40-101 (décembre 1979).

Un traitement des enregistrements de traction permet également de tracer la courbe de module en fonction

de l'allongement (voir figures 1 et 2 annexées), le module utilisé ici étant le module sécant mesuré en première élongation, et calculé en se ramenant à la section réelle de l'éprouvette, et non à la section initiale comme précédemment.

I-4. Pertes hystérétiques

Les pertes hystérétiques (PH) sont mesurées par rebond à 60°C au 6ème choc, et exprimées en % selon la relation suivante:

$$PH\ (\%) = 100[(W_0\text{-}W_1)/W_0],$$

avec $W_0$ : énergie fournie ; $W_1$ : énergie restituée.

## II. CONDITIONS DE REALISATION DE L'INVENTION

En plus des divers additifs habituels ou susceptibles d'être utilisés dans une composition de caoutchouc vulcanisable au soufre et destinée à la fabrication d'enveloppes de pneumatiques, les compositions selon l'invention comportent, comme constituants de base, au moins un élastomère diénique, au moins une charge blanche à titre de charge renforçante et au moins un agent de couplage (charge blanche/élastomère) consistant en un POS multifonctionnalisé alkoxy et mercapto-alkyl.

II-1. Elastomère diénique

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).
De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).
C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).
Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.
Ces définitions étant données, on entend en particulier par élastomère diénique susceptible d'être mis en oeuvre dans les compositions conformes à l'invention:

(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est en premier lieu mise en oeuvre avec des élastomères diéniques essentiellement insaturés, en particulier du type (a) ou (b) ci-dessus.
A titre de diènes conjugués conviennent notamment le butadiène-1,3, le 2-méthyl-1,3-butadiène, les 2,3-di (alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.
A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99 % et 20 % en poids d'unités diéniques et de 1 % à 80 % en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65%, une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) entre -40°C et -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Bien entendu, l'élastomère peut être couplé et/ou étoilé ou encore fonctionnalisé avec un agent de couplage et/ou d'étoilage ou de fonctionnalisation. L'élastomère peut également être du caoutchouc naturel ou un coupage à base de caoutchouc naturel avec tout élastomère, notamment diénique, synthétique.

De manière préférentielle, l'élastomère diénique de la composition conforme à l'invention est choisi dans le groupe des élastomères diéniques fortement insaturés constitué par les polybutadiènes, les polyisoprènes ou du caoutchouc naturel, les copolymères de butadiène-styrène, les copolymères de butadiène-isoprène, les copolymères d'isoprène-styrène, les copolymères de butadiène-styrène-isoprène, ou un mélange de deux ou plus de ces composés.

Lorsque la composition conforme à l'invention est destinée à une bande de roulement pour pneumatique, l'élastomère diénique est de préférence un copolymère de butadiène-styrène préparé en solution ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C, ce copolymère de butadiène-styrène étant éventuellement utilisé en mélange avec un polybutadiène possèdant de préférence plus de 90 % de liaisons cis-1,4.

II-2. Charge renforçante

La charge blanche utilisée à titre de charge renforçante peut constituer la totalité ou une partie seulement de la charge renforçante totale, dans le second cas associée par exemple à du noir de carbone.

De préférence, dans les compositions conformes à l'invention, la charge blanche renforçante constitue la majorité, i.e. plus de 50 % en poids de la charge renforçante totale, plus préférentiellement plus de 80 % en poids de cette charge renforçante totale.

Dans la présente demande. on entend par charge blanche "renforçante" une charge blanche capable de renforcer à elle seule, sans autre moyen qu'un agent de couplage intermédiaire, une composition de caoutchouc destinée à la fabrication d'enveloppes de pneumatiques, en d'autres termes capable de remplacer dans sa fonction de renforcement une charge conventionnelle de noir de carbone.

Préférentiellement, la charge blanche renforçante est de la silice ($SiO_2$) ou de l'alumine ($Al_2O_3$), ou un mélange de ces deux charges.

La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, même si les silices précipitées hautement dispersibles sont préférées, en particulier lorsque l'invention est mise en oeuvre pour la fabrication de pneumatiques présentant une faible résistance au roulement. Par silice hautement dispersible, on entend toute silice ayant une aptitude très importante à la désagglomération et à la dispersion dans une matrice polymérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société

Rhône-Poulenc, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

L'alumine renforçante utilisée préférentiellement est une alumine hautement dispersible ayant une surface BET allant de 30 à 400 $m^2/g$, plus préférentiellement de 80 à 250 $m^2/g$, une taille moyenne de particules au plus égale à 500 nm, plus préférentiellement au plus égale à 200 nm, un taux élevé de fonctions réactives de surface Al-OH, telle que décrite dans la demande EP-A-0 810 258 précitée. Comme exemples non limitatifs de telles alumines renforçantes, on peut citer notamment les alumines A125, CR125, D65CR de la société Baïkowski.

L'état physique sous lequel se présente la charge blanche renforçante est indifférent, que ce soit sous forme de poudre, de microperles, de granulés, ou encore de billes. Bien entendu on entend également par charge blanche renforçante des mélanges de différentes charges blanches renforçantes, en particulier de silices et/ou d'alumines hautement dispersibles telles que décrites ci-dessus.

La charge blanche renforçante peut être également utilisée en coupage (mélange) avec du noir de carbone. Comme noirs de carbone conviennent tous les noirs de carbone, notamment les noirs du type HAF, ISAF, SAF, conventionnellement utilisés dans les pneus et particulièrement dans les bandes de roulement des pneus. A titre d'exemples non limitatifs de tels noirs, on peut citer les noirs N115, N134, N234, N339, N347, N375. La quantité de noir de carbone présente dans la charge renforçante totale peut varier dans de larges limites, cette quantité étant préférentiellement inférieure à la quantité de charge blanche renforçante présente dans la composition.

De manière préférentielle, le taux de charge renforçante totale (charge blanche renforçante plus noir de carbone le cas échéant) est compris dans un domaine allant de 30 à 150 pce (parties en poids pour cent d'élastomère), l'optimum étant différent selon les applications visées ; en effet, le niveau de renforcement attendu sur une enveloppe de pneumatique vélo, par exemple, est de manière connue nettement inférieur à celui exigé sur une enveloppe de pneumatique pour véhicule de tourisme ou pour véhicule utilitaire tel que poids lourd.

II-3. Agent de couplage

L'agent de couplage utilisé dans les compositions conformes à l'invention est un POS multifonctionnalisé alkoxy et mercapto-alkyl, comportant par molécule :

α) - d'une part au moins un premier motif siloxyle porteur sur l'atome de silicium d'au moins un radical (i) alkoxyle (fonction Y), linéaire ou ramifié, choisi parmi les alkoxyles en $C_1$ à $C_{15}$; et

β) - d'autre part au moins un second motif siloxyle porteur sur l'atome de silicium d'au moins un radical (2i) de formule générale Z-SH (fonction X), Z étant un groupement de liaison divalent, linéaire ou ramifié, comportant de préférence de 2 à 30 atomes de carbone.

Ces POS sont donc des copolymères, statistiques, séquencés ou à blocs, branchés, linéaires ou cycliques, comportant au moins les deux fonctions Y et X précédemment définies sur la chaîne polysiloxane, que ce soit le long de la chaîne ou en bout(s) de chaîne.

Selon un mode particulier de réalisation de l'invention, le POS peut comporter au moins un troisième motif siloxyle fonctionnalisé porteur sur l'atome de silicium d'au moins un radical (3i) (fonction notée W) consistant en une chaîne hydrocarbonée éthyléniquement insaturée dont dérive par une réaction de sulfuration la fonction X, ladite chaîne insaturée, liée à l'atome de silicium par une liaison Si-C, comportant de 2 à 30 atomes de carbone.

Le radical (i) est plus préférentiellement choisi parmi les alkoxyles en $C_1$-$C_6$, notamment le méthoxyle, l'éthoxyle et le (iso)propoxyle.

Le radical (2i) est plus préférentiellement choisi parmi les radicaux Z-SH dans lesquels Z est un groupement alkylène en $C_2$-$C_{10}$, linéaire ou ramifié, comprenant éventuellement un atome d'oxygène, ou un groupement alkylène-cycloalkylène dont la partie alkylène a la même définition que ci-dessus et la partie cyclique comporte 5 à 12 atomes de carbone, et est éventuellement substituée par un ou deux groupe(s) alkyle(s) en $C_1$-$C_3$. Des radicaux répondant à cette définition ont été notamment décrits dans la demande WO96/16125 précitée, avec des fonctions thiols de nature primaire, secondaire ou tertiaire.

A titre de POS multifonctionnalisés pouvant être mis en oeuvre dans les compositions de l'invention, on peut choisir en particulier un POS comprenant, par molécule (i, j, k, p, q, r nombres entiers):

α) - d'une part, au moins un premier motif siloxyle fonctionnel de formule:

$$\textbf{(I)} \qquad (R)_i\,(Y)_p\,Si\,(O)_{(4-i-p)/2}$$

dans laquelle:

- $i = 0, 1$ ou $2$ ; $p = 1, 2$ ou $3$ ; avec la réserve que $(i+p) = 1, 2$ ou $3$;
- R est un radical hydrocarboné monovalent choisi parmi les alkyles, linéaires ou ramifiés, en $C_1$-$C_6$, en particulier le méthyle, l'éthyle, le propyle, le butyle, et/ou parmi les aryles et en particulier le phényle, les radicaux R étant identiques ou différents quand $i = 2$;
- Y est un radical (i) tel que défini supra, les radicaux Y étant identiques ou différents quand $p = 2$ ou $3$;

β) - d'autre part, au moins un second motif siloxyle fonctionnel de formule:

**(II)** $(R)_j\ (X)_q\ Si\ (O)_{(4-j-q)/2}$

dans laquelle:

- $j = 0, 1$ ou $2$ ; $q = 1, 2$ ou $3$ ; avec la réserve que $(j+q) = 1, 2$ ou $3$;
- R répond à la même définition que celle donnée supra pour le substituant R du motif (I) ci-dessus et peut être identique ou différent de ce dernier;
- X est un radical (2i) tel que défini supra, les radicaux X étant identiques ou différents quand $q = 2$ ou $3$;

γ) - et éventuellement au moins un troisième motif siloxyle fonctionnel, précurseur du motif (II) précédent, ayant pour formule:

**(III)** $(R)_k\ (W)_r\ Si\ (O)_{(4-k-r)/2}$

dans laquelle:

- $k = 0, 1$ ou $2$ ; $r = 1, 2$ ou $3$ ; avec la réserve que $(k+r) = 1, 2$ ou $3$ ;
- R répond à la même définition que pour le substituant R du motif (II);
- W est un radical (3i) tel que défini supra, les radicaux W étant identiques ou différents quand $r = 2$ ou $3$.

La notation simplifiée utilisée dans les formules (I) à (III) ci-dessus est bien connue de l'homme du métier dans le domaine des polyorganosiloxanes ; elle englobe les différentes formules particulières possibles pour les motifs siloxyle, quels que soient notamment leur taux de fonctionnalisation, leur position sur la chaîne polysiloxane (le long de la chaîne ou en bout(s) de chaîne) ou la nature du POS (par exemple linéaire, branché ou cyclique).

Des POS répondant à la définition ci-dessus, porteurs des fonctions Y, X et éventuellement W, ont été notamment décrits dans la demande WO96/16125 précitée.

Selon un mode plus préférentiel de réalisation, l'invention est mise en oeuvre à partir de POS linéaires de formule partielle (IV) incorporant le long de la chaîne polysiloxane au moins les motifs suivants dans les proportions suivantes (i, j, k, p, q, r sont alors tous égaux à 1 en ce qui concerne les motifs siloxyles situés le long de la chaîne polysiloxane):

**(IV)** $-\ (R\ Y\ Si\ O)_a\ -\ (R\ W\ Si\ O)_b\ -\ (R\ X\ Si\ O)_c\ -,$

R, Y, W et X, identiques ou différents entre eux, ayant les significations données précédemment, et les nombres a, b et c (entiers ou fractionnaires) vérifiant les relations suivantes: $a = 1$ à $150$ ; $b = 0$ à $85$ ; $c = 1$ à $100$ ; $a+b+c = 2$ à $300$.

On comprendra aisément que lorsque le POS de formule partielle (IV) ci-dessus ne comprend, le long de la chaîne polysiloxane, aucun autre motif que les trois ci-dessus, il répond alors à la formule générale (IV-1):

**(IV-1)** $(A)\ -\ (R\ Y\ Si\ O)_a\ -\ (R\ W\ Si\ O)_b\ -\ (R\ X\ Si\ O)_c\ -\ (B)\ ,$

dans laquelle les groupements terminaux A et B, porteurs ou non de fonctions Y, X ou W, sont choisis parmi les groupements suivants:

- en ce qui concerne A: $(R_{i'}\ Y_{p'}\ Si\ O\ -)$ et/ou $(R_{j'}\ X_{q'}\ Si\ O\ -)$ et/ou $(R_{k'}\ W_{r'}\ Si\ O\ -)$,

- en ce qui concerne B: (- Si $R_{i'}$ $Y_{p'}$) et/ou (- Si $R_{j'}$ $X_{q'}$) et/ou (- Si $R_{k'}$ $W_{r'}$)

  avec:

  i' = 0, 1, 2 ou 3 ; p' = 0, 1, 2 ou 3 ; et la réserve que (i'+p') = 3;
  j' = 0, 1, 2 ou 3 ; q' = 0, 1, 2 ou 3 ; et la réserve que (j'+q') = 3;
  k' = 0, 1, 2 ou 3 ; r' = 0, 1, 2 ou 3 ; et la réserve que (k'+r') = 3,

  R, Y, W et X, identiques ou différents entre eux, respectivement, lorsqu'ils sont présents dans A et/ou B, ainsi que a, b et c ayant les significations données supra.

A titre d'exemple, lorsque la chaîne polysiloxane ne comporte aucune fonctionnalité Y, X ou W en bout(s) de chaîne, le POS de formule générale (IV-1) ci-dessus a alors pour formule particulière (IV-2):

**(IV-2)** $R_3$ Si O - (R Y Si O)$_a$ - (R W Si O)$_b$ - (R X Si O)$_c$ - Si $R_3$ .

Lorsque la chaîne polysiloxane comporte par exemple une (seule) fonction Y à chaque bout de chaîne, le POS de formule générale (IV-1) ci-dessus a alors pour formule particulière (IV-3):

**(IV-3)** $R_2$ Y Si O - (R Y Si O)$_a$ - (R W Si O)$_b$ - (R X Si O)$_c$ - Si Y $R_2$.

Plus préférentiellement, dans les formules I à IV-3 ci-dessus, R est le méthyle ou l'éthyle, Y est le méthoxyle ou l'éthoxyle, W est choisi parmi les radicaux (3i-1) et (3i-2) indiqués ci-après, le radical X correspondant qui en dérive étant référencé ci-dessous (2i-1) ou (2i-2):

(3i-1) : 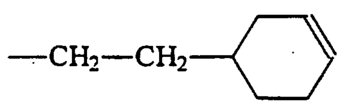

(3i-2) : 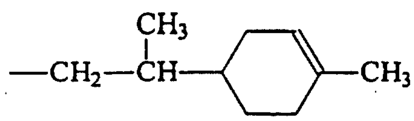

(2i-1) : 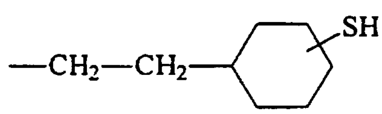

(2i-2) : 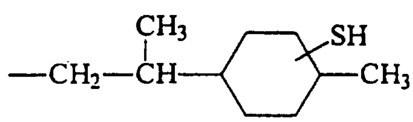

L'invention est tout préférentiellement mise en oeuvre avec un POS linéaire de formule générale (IV) ci-dessus, et notamment de formules IV-1, IV-2 ou IV-3, dans lesquelles on a:

- R = méthyle;
- Y (radical i) = éthoxyle (OEt);
- W (radical 3i) = éthylène-cyclohexényle (i.e. radical 3i-1);
- X (radical 2i) = Z-SH avec Z = éthylène-cyclohexylène (i.e. radical 2i-1);
- a = 1 à 50, plus préférentiellement 1 à 40;
- b = 0 à 30, plus préférentiellement 0 à 20;
- c = 1 à 40, plus préférentiellement 1 à 25;
- a+b+c = 10 à 100, plus préférentiellement 10 à 70.

Lorsque la chaîne polysiloxane ne contient aucun autre motif siloxyle que les motifs (I), (II) et (III) indiqués supra, c'est-à-dire aucune autre fonction que les fonctions Y, X ou W (comme notamment une quatrième fonction pouvant dériver par exemple par une réaction secondaire de sulfuration d'une des fonctions X ou W), l'homme du métier comprendra aisément qu'un tel POS préférentiel a alors pour formule développée **(IV-4)**:

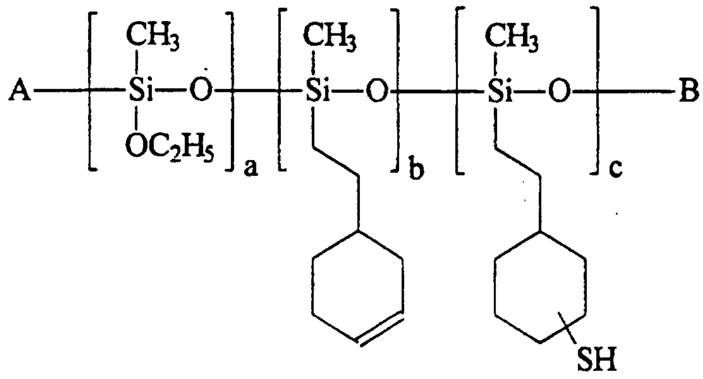

formule dans laquelle les groupements terminaux A et B sont tels que définis supra, avec la signification suivante pour R, Y, W et X s'ils sont présents au moins une fois dans (A) et/ou (B):

- R = méthyle;
- Y = OEt;
- W = radical (3i-1);
- X = radical (2i-1).

En particulier, lorsque le POS ci-dessus de formule (IV-4) comporte en bouts de chaîne des groupements (A) et (B) porteurs exclusivement de groupements méthyle, sa formule devient alors (IV-5):

**(IV-5)**

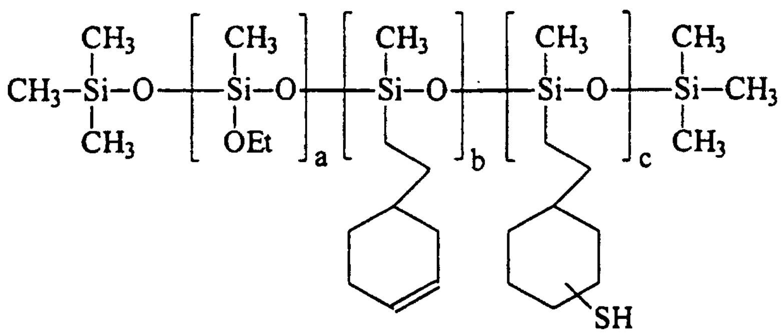

Les POS de formule générale (IV) porteurs de fonctions thiols secondaires, et en particulier ceux des formules particulières (IV-4) et (IV-5) ci-dessus porteurs de radicaux 2i-1, ont montré une très bonne réactivité vis-à-vis des élastomères diéniques utilisés dans les compositions pour pneumatiques.
Ils peuvent être préparés par une réaction de sulfuration à l'hydrogène sulfuré ($H_2S$) sur des POS intermédiaires porteurs des fonctions Y et W correspondantes, ces POS intermédiaires étant dénommés ci-après "POS précurseurs".
Les POS précurseurs peuvent être préparés selon le procédé décrit dans la demande WO96/16125 précitée, consistant essentiellement:

- d'une part à faire réagir un polyméthylhydrogénosiloxane (PMHS) porteur de fonctions hydrogène avec au moins un alcool (par exemple l'éthanol) dont dérive la fonction alkoxyle Y, utile comme réactif et comme solvant réactionnel. en présence d'un catalyseur approprié (notamment catalyseur de Karstedt au platine), selon un mécanisme de déshydrogénocondensation utilisant une fraction des groupements ≡SiH disponibles au départ; et

- d'autre part à mettre en oeuvre l'addition du POS ainsi obtenu par déshydrogénocondensation sur au moins un

composé comprenant au moins deux insaturations éthyléniques dont dérive la fonction insaturée W, selon un mécanisme d'hydrosilylation conduit à l'aide des groupements ≡SiH restants.

Les POS finals, c'est-à-dire fonctionnalisés alkoxy et mercapto-alkyl, sont ensuite préparés par une réaction de sulfuration des POS précurseurs, en faisant agir $H_2S$ sur ces POS précurseurs. D'un point de vue pratique, le procédé est conduit dans un réacteur standard et fermé, permettant de mettre en contact du liquide et du gaz avec un catalyseur éventuellement hétérogène, en opérant éventuellement sous pression ; la pression n'est pas un paramètre critique, mais il est avantageux d'opérer sous une pression au moins égale à 0,1 MPa et, de préférence, située dans l'intervalle allant de 0,5 à 2 MPa, plus préférentiellement encore de 0,7 à 1,4 MPa. Les conditions de l'alimentation en $H_2S$ sont déterminées de manière à engager un excès molaire d'$H_2S$ au moins égal à 5 %, par rapport à l'insaturation éthylénique de la fonction W portée par le POS précurseur. La température de réaction se situe de préférence dans l'intervalle allant de 50°C à 120°C.

Comme catalyseur à mettre en oeuvre, conviennent les composés initiateurs radicalaires comme par exemple les composés azo-organiques, les peroxydes organiques, les percarbonates organiques, utilisés seuls ou en association avec des promoteurs tels que par exemple du nickel et/ou des composés phosphorés trivalents (voir par exemple FR-A-2 048 451). De manière préférentielle, on utilise comme catalyseur au moins un composé initiateur de radicaux libres appartenant à la famille des composés azo-organiques et des peroxydes organiques, plus préférentiellement au moins un composé initiateur radicalaire appartenant à la famille des composés azo-organiques. comme par exemple 2,2'-azobis(2,4-diméthyl)pentane-nitrile, 2,2'-azobis-(isobutyronitrile), 2-(tert-butylazo)-2,4-diméthylpentane-nitrile, 2-(tert-butylazo)isobutyronitrile, 2-(tert-butylazo)-2-méthylbutane-nitrile, 1,1-azobis-cyclohexanecarbonitrile. Le catalyseur que l'on retient tout spécialement est le 2,2'-azobis(isobutyronitrile) (en abréviation AIBN). Pour la plupart des réactions, la quantité de catalyseur, exprimée en pourcentage en poids de catalyseur par rapport au POS précurseur, se situe dans l'intervalle allant de 0,1 à 10 %, et, de préférence, allant de 0,5 à 4 %.

Les réactions entre $H_2S$ et le POS précurseur peuvent être conduites en masse en milieu hétérogène et sans solvant, mais, de manière préférentielle, elles sont conduites en milieu homogène par addition d'un solvant ou d'un mélange de solvant(s) commun(s) au POS précurseur et au catalyseur. Les solvants préférés sont de type apolaire aprotique, comme par exemple le chlorobenzène, le toluène, le xylène, l'hexane, le cyclohexane, l'octane, le décane. Les solvants retenus plus préférentiellement sont le toluène et le xylène. La durée des réactions n'est pas critique ; elle peut par exemple se situer entre 1 heure et 4 heures pour des températures de l'ordre de 70 à 90°C.

Le procédé peut être mis en oeuvre en discontinu ou en continu, en suivant tout mode opératoire connu en soi. Un mode opératoire convenant bien est le suivant: dans un premier temps, le réacteur est alimenté avec du solvant et le POS précurseur, puis il est mis ensuite en relation continue avec la source de $H_2S$ pour saturer le milieu réactionnel avec le gaz ; et dans un second temps, on introduit alors dans le réacteur la solution de catalyseur. Mais on peut aussi, selon un autre mode opératoire, n'introduire le POS précurseur que dans le second temps, en même temps que la solution de catalyseur.

Les POS multifonctionnalisés précédemment décrits, porteurs de fonctions alkoxyles et thiols, se sont révélés suffisamment efficaces à eux seuls et peuvent constituer avantageusement le seul agent de couplage présent dans les compositions conformes à l'invention.

L'homme du métier saura ajuster la teneur en agent de couplage POS dans les compositions de l'invention, en fonction de l'application visée, de la nature du polymère mis en oeuvre, et de la quantité de charge blanche renforçante utilisée.

Cette teneur en agent de couplage POS sera généralement comprise dans un domaine de 0,5 à 12% (% en poids par rapport au poids de charge blanche renforçante), plus préférentiellement dans un domaine de 2 à 10%.

En dessous des taux minima indiqués ci-dessus l'effet est insuffisant, alors qu'au-delà des taux maxima indiqués ci-dessus on n'observe plus d'amélioration du couplage alors que les coûts de la formulation continuent d'augmenter.

II-4. Additifs divers

Bien entendu, les compositions conformes à l'invention contiennent, outre les composés déjà décrits, tout ou partie des constituants habituellement utilisés dans les mélanges de caoutchouc diéniques destinés à la fabrication d'enveloppes de pneumatiques, comme par exemple des plastifiants, des pigments, des antioxydants, des antiozonants, un système de réticulation à base soit de soufre, soit de donneurs de soufre et/ou de peroxyde et/ou de bismaléimides, des accélérateurs de vulcanisation, des huiles d'extension, etc ... A la charge blanche renforçante peut être également associée, si besoin est, une charge blanche conventionnelle peu ou non renforçante, par exemple des argiles, la bentonite, le talc, la craie, le kaolin, l'oxyde de titane.

Les compositions conformes à l'invention peuvent contenir, en complément des POS multifonctionnalisés ci-dessus, des agents de recouvrement de la charge blanche renforçante, tels que par exemple des alkoxysilanes, des

polyols, des polyéthers (par exemple des polyéthylèneglycols), des amines, des POS hydroxylés comme par exemple des α,ω-dihydroxypolydiorganosiloxanes (notamment des dihydroxypolydiméthylsiloxanes), ou encore des POS hydrolysables, porteurs par exemple de la seule fonction Y alkoxyle. Les compositions conformes à l'invention pourraient contenir aussi d'autres agents de couplage.

II-5. Préparation des compositions

Les compositions de caoutchouc sont préparées en mettant en oeuvre les polymères diéniques selon des techniques tout à fait connues, par travail thermomécanique en une ou deux étapes dans un mélangeur interne à palettes, suivi d'un mélangeage sur mélangeur externe.

Selon le procédé classique en une étape, on introduit dans un mélangeur interne usuel tous les constituants nécessaires à l'exception du système de vulcanisation. Le résultat de cette première étape de mélangeage est repris ensuite sur un mélangeur externe, généralement un mélangeur à cylindres, et on y ajoute alors le système de vulcanisation. Une seconde étape peut être ajoutée dans le mélangeur interne, essentiellement dans le but de faire subir au mélange un traitement thermique complémentaire.

## III. EXEMPLES DE REALISATION DE L'INVENTION

III-1. Synthèse des POS

Les POS multifonctionnalisés alkoxy et mercapto-alkyl utilisés dans les exemples de réalisation ci-après sont des POS linéaires répondant à la formule (IV) précédente dans laquelle:

- R = méthyle;
- Y (radical i) = éthoxyle (OEt);
- W (radical 3i) = éthylène-cyclohexényle (i.e. radical 3i-1);
- X (radical 2i) = Z-SH avec Z = éthylène-cyclohexylène (i.e. radical 2i-1).

La synthèse de ces POS est réalisée en trois étapes (éthoxylation, hydrosilylation, puis sulfuration) à partir de PMHS connus tels que décrits par exemple dans WO96/16125, selon un procédé de mise en oeuvre en discontinu ou en continu,

III-1-A). Synthèse en discontinu - POS Nos 1, 2 et 3

a) étape 1: préparation d'un POS à motifs fonctionnels ≡Si-$OC_2H_5$ (fonction Y) et ≡SiH

On procède de la manière suivante: dans un réacteur de 5 litres, équipé d'un système d'agitation et dont le volume intérieur est maintenu sous une atmosphère d'azote sec, on introduit 3 litres d'éthanol absolu et 1,081 g d'une solution dans le divinyltétraméthyldisiloxane d'un complexe du platine à 13,6 % en poids de platine métal ligandé par du divinyltétraméthyldisiloxane (catalyseur de Karstedt). Le mélange est agité et on coule progressivement, en 6 heures 15 minutes, 1 kg d'une huile PMHS à extrémités triméthylsilyles comprenant 1584 milli-équivalents (meq) de motifs ≡SiH pour 100 g d'huile. Pendant l'addition progressive de l'huile PMHS, la température de la masse réactionnelle est maintenue à 65°C. On observe un dégagement d'hydrogène. L'excès d'éthanol est éliminé à l'aide d'un évaporateur rotatif.

On récupère ainsi 1566 g d'une huile silicone limpide correspondant à la formule moyenne suivante, confirmée par les analyses par résonance magnétique nucléaire (RMN) du silicium (avec a=35 ; b = 17):

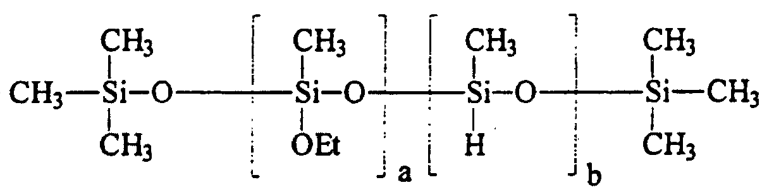

b) étape 2: préparation d'un POS précurseur à motifs fonctionnels ≡Si-$OC_2H_5$ (fonction Y) et ≡Si-$(CH_2)_2$-cyclohexényle (fonction W)

On procède de la manière suivante: dans un réacteur de 2 litres, équipé d'un système d'agitation et dont le volume intérieur est maintenu sous une atmosphère d'azote sec, on introduit 295,4 g d'une solution de vinyl-4 cyclohexène-1 et 0,3434 g de la solution de catalyseur de Karstedt. Le mélange est agité et on porte la température du milieu réactionnel à 90°C. On coule ensuite progressivement, en 7 heures, 618,5 g de l'huile silicone obtenue à l'issue de l'étape 1) précédente. En fin de coulée, on note que le taux de transformation des motifs fonctionnels ≡SiH est complet. Le mélange réactionnel est ensuite dévolatilisé en opérant un chauffage à 80°C. sous une pression réduite de $1{,}33.10^2$ Pa, pendant 30 minutes.

On récupère ainsi 754 g d'une huile silicone limpide, de viscosité 300 mPa.s, correspondant à la formule moyenne suivante, confirmée par les analyses RMN (avec a=35 ; b = 17):

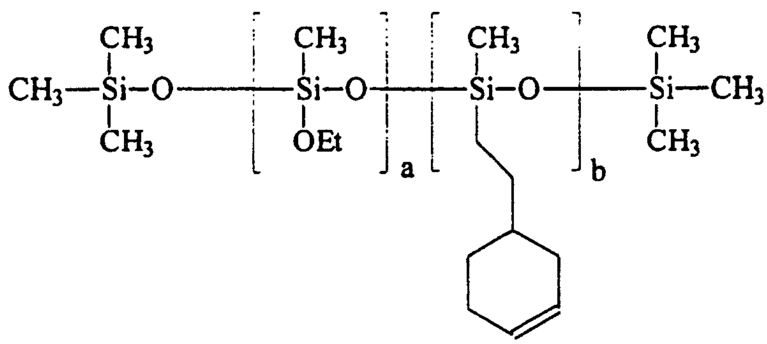

Le POS précurseur ci-dessus, porteur des fonctions Y et W, est dénommé ci-après POS No1.

c) étape 3; préparation d'un POS final (POS No2 et No3) à motifs fonctionnels ≡Si-$OC_2H_5$ (fonction Y) et ≡Si-(éthylène-cyclohexylène)-SH (fonction X)

On procède dans cette dernière étape de la manière suivante: dans un réacteur en acier inoxydable de 2 litres, équipé d'un système d'agitation et d'un système d'alimentation de gaz $H_2S$, dont le volume intérieur est maintenu sous une atmosphère d'azote sec, on charge V1 g de toluène sec, puis M1 g de l'huile silicone obtenue à l'issue de l'étape 2) précédente (POS précurseur). On effectue ensuite un balayage du volume intérieur du réacteur ainsi chargé avec de l'$H_2S$. Le mélange est agité et on porte la température du milieu réactionnel à T1°C, sous une pression de $H_2S$ égale à P1 exprimée en MPa. On coule ensuite progressivement, en t1 minutes, une solution de catalyseur à base de M2 g d'AIBN et de V2 g de toluène sec. En fin de coulée, le mélange réactionnel est laissé à réagir pendant t2 minutes à la température T1°C, sous agitation. Au bout de la durée t2, on purge l'appareillage à l'aide d'un courant d'azote et on procède ensuite à l'évaporation du solvant dans un évaporateur rotatif en opérant un chauffage à environ 80-100°C, sous une pression réduite d'environ $7.10^2$ Pa, pendant 1 heure 30 minutes.

On récupère ainsi M3 g d'une huile silicone légèrement jaune qui est analysée par RMN. L'analyse RMN révèle que, selon les conditions particulières de mise en oeuvre de l'étape 3), une fraction minoritaire de fonctions X ou W peuvent subir, au cours de cette dernière étape, une réaction secondaire de sulfuration avec la création de ponts mono- ou polysulfure entre des sites éthylène-cyclohexylène-SH ou éthylène-cyclohexényle voisins appartenant à une même chaine polysiloxane ou à des chaînes polysiloxane voisines.

Deux exemples de POS (POS No2 et POS No3) sont préparés selon les conditions particulières qui suivent:

- POS No2: V1 = 530 g ; M1 = 70,4 g ; T1 = 70°C ; P1 = 0.85 MPa ; t1 = 65 min ; M2 = 0,72 g ; V2 = 24,4 g ; t2 = 115 min ; M3 = 62 g;

- POS No3: V1 = 415 g ; M1 = 140,1 g ; T1 = 70°C ; P1 = 1,3 MPa ; t1 = 60 min ; M2 = 4,21 g ; V2 = 210,8 g ; t2 = 120 min ; M3 = 120 g.

Le POS No2 ainsi préparé correspond à la formule moyenne (IV-5) indiquée supra, dans laquelle: a = 35 ; b = 9,7 ; c = 7,3 ; b+c = 17,
c'est-à-dire que 43% en moyenne des 17 fonctions W du précurseur (POS No1) ont été transformées en fonction

≡Si-(éthylène-cyclohexylène)-SH (fonctions X), les 57% restants étant des fonctions W n'ayant pas réagi.

Le POS No3, conforme à la formule IV, est identique au POS No2 aux différences près qui suivent: a = 35 ; b = 2,7 ; c = 12,8 ; b+c = 15.5 ,

c'est-à-dire qu'en moyenne 75 % des 17 fonctions W du précurseur (POS No1) ont été transformées en fonctions ≡Si-(éthylène-cyclohexylène)-SH (fonctions X), et que 16 % des fonctions initiales W n'ont pas réagi ; l'analyse RMN révèle ici que les 9 % restants correspondent à des fonctions X ou W qui ont subi une réaction secondaire de sulfuration avec la création de ponts monosulfure ou disulfure (ponts $S_1$ ou $S_2$) entre des sites éthylène-cyclohexylène-SH ou éthylène-cyclohexényle voisins appartenant à une même chaîne polysiloxane ou à des chaînes polysiloxane voisines.

III-1-B). Synthèse en continu - POS No 4

a) étape 1: préparation d'un POS à motifs fonctionnels ≡Si-$OC_2H_5$ (fonction Y) et ≡SiH

On procède de la manière suivante, dans un réacteur industriel fonctionnant en continu équipé d'un système d'agitation et dont le volume intérieur est maintenu sous atmosphère d'azote sec:

L'huile PMHS à extrémités triméthylsilyles comprenant 1584 milliéquivalents (meq) de motifs ≡SiH pour 100 g d'huile est introduite à 47°C dans le réacteur à un débit de 5,3 kg/h. Le catalyseur de Karstedt (du platine ligandé par du divinyltétraméthyldisiloxane, en solution dans le divinyltétraméthyldisiloxane à une concentration de 10 % en masse de platine métal), est dissous dans l'éthanol de manière à obtenir une concentration finale de 20 ppm (parties par million) de platine métal. La solution ainsi préparée est introduite à 50°C, à un débit de 4,5 kg/h dans le réacteur. La réaction est poursuivie ainsi à la température de reflux du milieu réactionnel ; la température de la masse réactionnelle est alors d'environ 72°C ; on évacue et on récupère le gaz formé (environ 1,08 $m^3$/h) en éliminant l'hydrogène qu'il contient et en recyclant l'alcool par condensation.

On récupère ainsi une huile silicone limpide à motifs ≡SiH et motifs ≡Si-$OC_2H_5$ (fonction Y). Au cours de cette étape de préparation en réacteur industriel, on a constaté que les chaînes siloxanes peuvent subir des scissions, ce qui conduit à des chaînes plus courtes, mono- ou diéthoxylées en bout(s) de chaîne.

b) étape 2: préparation d'un POS précurseur à motifs fonctionnels =-Si-$OC_2H_5$ (fonction Y) et ≡Si-$(CH_2)_2$-cyclohexényle (fonction W)

Le POS à motifs ≡SiH et ≡Si-$OC_2H_5$ précédent est transféré dans un second réacteur fonctionnant en discontinu (mode "batch") pour être soumis à l'hydrosilylation, afin de transformer les motifs ≡SiH résiduels en fonctions ≡Si-$C_2H_4$-cyclohexényle (fonctions W). La consommation de vinylcyclohexène est de 51,3 kg pour 10 h de fonctionnement et la température à l'intérieur du réacteur est de 70°C ; l'éthanol et le vinylcyclohexène volatilisés sont condensés et recyclés.

On récupère ainsi une huile silicone limpide dont la formule déterminée par RMN du silicium est la suivante:

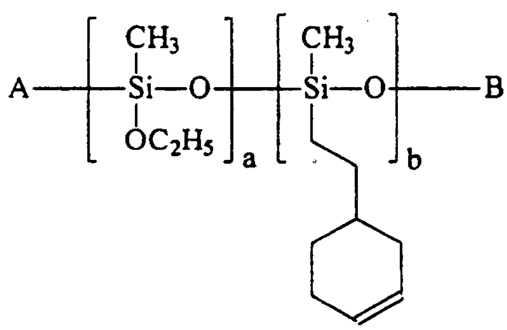

avec:

a = 18 ± 2 et b = 10 ± 2 ;
A et B (% molaire):

| | |
|---|---|
| $(CH_3)_3SiO$- et/ou -$Si(CH_3)_3$ | 59%; |

(suite)

| | |
|---|---|
| $(C_2H_5O)(CH_3)_2SiO$- et/ou -$Si(C_2H_5O)(CH_3)_2$ | 20 % ; |
| $(C_2H_5O)_2(CH_3)SiO$- et/ou -$Si(C_2H_5O)_2(CH_3)$ | 21 %. |

c) étape 3: préparation d'un POS final (POS No4) à motifs fonctionnels ≡Si-$OC_2H_5$ (fonction Y) et ≡Si-(éthylène-cyclohexylène)-SH (fonction X)

On procède dans cette dernière étape comme indiqué précédemment pour les POS No2 et No3, mais selon les conditions particulières qui suivent: VI = 530 g ; M1 = 70,4 g ; T1 = 70°C ; P1 = 0,85 MPa ; t1 = 65 min ; M2 = 0,72 g ; V2 = 24,4 g ; t2 = 115 min ; M3 = 62 g.

Selon l'analyse RMN, ce POS No4 répond à la formule (IV-4) indiquée supra, avec (A et B inchangés):

a = 18 ; b = 5,5 ; c = 4,5 ; b+c = 10 ,

c'est-à-dire que 45% en moyenne des 10 fonctions W du POS précurseur ont été transformées en fonction ≡Si-(éthylène-cyclohexylène)-SH (fonctions X), et que 55% des fonctions initiales W n'ont pas réagi.

III-2. Préparation des compositions et essais

On procède pour les essais qui suivent de la manière suivante: on introduit l'élastomère diénique ou le mélange d'élastomères diéniques dans un mélangeur interne, rempli à 70 % et dont la température est d'environ 60°C, puis après un temps approprié de malaxage, par exemple de l'ordre de 1 minute, on ajoute tous les autres ingrédients à l'exception du système de vulcanisation. On conduit alors un travail thermomécanique en deux étapes, qui durent respectivement environ 5 et 4 minutes, avec une vitesse moyenne des palettes de 45t/min, jusqu'à atteindre une température maximale de tombée de 160°C. On récupère le mélange ainsi obtenu puis on ajoute le système de vulcanisation sur un mélangeur externe (homo-finisseur) à 30°C. La vulcanisation est effectuée à 150°C.

A) Essai 1

Dans l'essai qui suit on compare 4 compositions de caoutchouc (coupage SBR/BR) à base de silice destinées à la fabrication d'enveloppes de pneumatiques ou de bandes de roulement. L'élastomère SBR (copolymère de styrène-butadiène) est préparé en solution, et comprend 26,5 % de styrène, 59,5 % de motifs polybutadiène 1-2 et 23 % de motifs polybutadiène 1-4 trans. L'élastomère BR (polybutadiene) possède plus de 90 % de liaisons cis-1,4 (environ 93 %).

Ces 4 compositions sont identiques aux différences près qui suivent:

- composition No1: pas d'agent de couplage;
- composition No2: TESPT (Si69 de la société Degussa);
- composition No3: POS No1;
- composition No4: POS No2.

Seule la composition No4 est conforme à l'invention ; la composition No1 est le témoin de cet essai, alors que la composition No2 représente la référence de l'art antérieur. Les tableaux 1 et 2 donnent successivement la formulation des différentes compositions (tableau 1 - taux des différents produits exprimés en pce), leurs propriétés avant et après cuisson (150°C, 40 minutes). On note en particulier que le taux d'agent de couplage (Si69) dans la composition No2 est supérieur de 60 % au taux d'agent de couplage (POS No2) dans la composition No4.

La figure 1 reproduit quant à elle les courbes de module (en MPa) en fonction de l'allongement (en %): ces courbes sont notées C1 à C4 et correspondent respectivement aux compositions No1 à No4.

L'étude de ces différents résultats conduit aux observations suivantes:

- la mise en oeuvre à cru des compositions comportant l'agent de couplage Si69 ou les POS est facilitée, en raison d'une viscosité Mooney nettement plus basse indicatrice d'un bon recouvrement de la silice;
- il n'apparaît aucun problème de grillage (i.e. de vulcanisation prématurée) sur la composition No4 (T5 supérieur à 30 comme pour l'agent de couplage Si69), malgré la présence des fonctions thiols sur le POS No2 ;
- en outre, et de manière tout aussi inattendue, le taux de couplage silice/élastomère, illustré par le rapport M300/M100 (qui est pour l'homme du métier un bon indicateur du niveau de renforcement) apparaît aussi bon avec le POS No2 qu'avec l'agent de couplage de référence (Si69), malgré un taux de POS très nettement inférieur;
- le POS No1 porteur des fonctions Y, comme l'on pouvait s'y attendre, n'exerce qu'une simple fonction d'agent de

recouvrement de la silice (baisse de la viscosité à cru, du module M10, mais rapport M300/M100 peu modifié par rapport à la composition No1);

- les propriétés d'hystérèse et les propriétés rupture sont équivalentes entre les compositions No2 (Si69) et No4 (POS No2);
- la figure 1 confirme les observations précédentes: la composition No4 conforme à l'invention (POS No2 et courbe C4) révèle une performance très voisine de celle de la composition No2 (Si69 et courbe C2), alors que la composition No3 (POS No1 et courbe C3) ne montre aucune amélioration, hormis l'effet de recouvrement observé à faible allongement, par rapport à la composition témoin (courbe C1) dépourvue de tout agent de couplage ou de recouvrement.

La composition conforme à l'invention, malgré un taux d'agent de couplage nettement inférieur, montre donc de manière inattendue une performance équivalente à la composition de référence comportant l'agent de couplage conventionnel TESPT.

Des tests complémentaires ont montré par ailleurs que le remplacement du POS No2 par le POS No3, dans des compositions de même formulation que ci-dessus, conduit à des performances de couplage qui sont sensiblement identiques à celles fournies par le POS No2.

B) Essai 2

On compare, dans ce deuxième essai, 3 compositions de caoutchouc naturel à base de silice précipitée, comportant un faible taux d'agent de couplage (3,2 pce). Ces 3 compositions sont identiques aux différences près qui suivent:

- composition No5: agent de couplage conventionnel Si69;
- composition No6: POS No1;
- composition No7: POS No2.

Seule la composition No7 est donc conforme à l'invention. Les tableaux 3 et 4 donnent successivement la formulation des différentes compositions, puis leurs propriétés avant et après cuisson (150°C, 25 min). La figure 2 reproduit quant à elle les courbes de module (en MPa) en fonction de l'allongement (en %), les courbes notées C5 à C7 correspondant respectivement aux compositions No5 à No7.

A la lecture des différents résultats, il apparaît clairement que le POS No2 donne des performances proches de, ou équivalentes à celles fournies par l'agent de couplage conventionnel: voir notamment fig. 2, courbes C5 et C7, alors que le POS No 1 (courbe C6) montre une performance très nettement insuffisante.

C) Essai 3

Dans l'essai qui suit on compare 2 compositions de caoutchouc diénique renforcées d'une charge blanche (silice hautement dispersible), en coupage avec du noir de carbone, destinées à la fabrication d'enveloppes de pneumatiques ou de bandes de roulement pour ces pneumatiques. L'élastomère SBIR (copolymère de styrène-butadiène-isoprène) est un élastomère commercial comportant 36% de motifs styrène, 20% de motifs butadiène et 44% de motifs isoprène.

Les deux compositions sont identiques aux différences près qui suivent:

- composition No8 (témoin): sans agent de couplage;
- composition No9 (conforme à l'invention): POS No4 de formule (IV-4).

Les tableaux 5 et 6 donnent respectivement la formulation des différentes compositions (tableau 5: taux des différents produits exprimés en pce) et leurs propriétés avant et après cuisson à 150°C. Les propriétés après cuisson sont ici déterminées à l'"optimum" de cuisson" (i.e. à T99), déterminé de manière connue selon la norme AFNOR-NF-T43-015 de août 1975, dans laquelle T99 correspond à la durée nécessaire pour obtenir 99% de l'écart maximal de couple entre le couple minimal avant cuisson et le couple maximal après cuisson, à la température de cuisson (150°C dans le cas présent).

L'étude de ces différents résultats conduit aux observations suivantes:

- la mise en oeuvre à cru de la composition comportant l'agent de couplage (POS) est grandement facilitée par rapport à la composition témoin, en raison d'une viscosité Mooney nettement plus basse (37 UM au lieu de 62 UM) indicatrice d'un bon recouvrement de la charge blanche;

- la cuisson est certes plus rapide en présence du POS, mais il n'apparaît aucun problème de grillage (i.e. de vulcanisation prématurée) sur la composition No9 (T5 supérieur à 10 min) malgré la présence des fonctions thiols sur le POS;
- le taux de couplage (silice/élastomère), illustré par le rapport M300/M100. est très nettement amélioré en présence du POS (plus d'un tiers);
- les propriétés d'hystérèse et la contrainte à la rupture sont améliorées.

D) Essai 4

On compare dans cet essai 2 compositions de caoutchouc diénique (élastomère SBR) renforcées avec une alumine hautement dispersible.

Ces 2 compositions sont identiques aux différences près qui suivent:

- composition No10 (témoin): sans agent de couplage;
- composition No11 (conforme à l'invention): POS No4 de formule (IV-4).

Les tableaux 7 et 8 donnent successivement la formulation des différentes compositions, puis leurs propriétés avant et après cuisson (150°C, 40 min). On constate sur la composition conforme à l'invention des améliorations du même type que celles constatées pour l'essai 3 précédent, à savoir:

- mise en oeuvre à cru améliorée avec l'agent de couplage POS (viscosité Mooney de 47 UM au lieu de 64 UM);
- pas de problème de grillage avec le POS (T5 de 15 min);
- rapport M300/M100 pratiquement doublé par rapport au témoin;
- propriétés d'hystérèse et contrainte à la rupture améliorées.

En conclusion, de manière imprévisible pour l'homme du métier, il a été découvert que les compositions de caoutchouc conformes à l'invention, renforcées d'une charge blanche et comportant à titre d'agent de couplage un polyorganosiloxane multifonctionnalisé porteur d'au moins une fonction alkoxyle et d'au moins une fonction thiol, présentent des propriétés de renforcement satisfaisantes, équivalentes à celles observées sur des compositions de l'art antérieur utilisant comme agents de couplage des organosilanes polysulfurés conventionnels, notamment le TESPT.

Pour des performances de couplage quasiment identiques, il est possible d'utiliser, grâce à l'invention, des taux d'agents de couplage qui peuvent être nettement plus faibles que ceux habituellement employés sur les organosilanes polysulfurés conventionnels type TESPT.

Le résultat ci-dessus est obtenu, de manière inattendue, sans occasionner de pénalisation en terme de "sécurité au grillage", et donc sans perturber la mise en oeuvre des compositions, malgré la présence de la fonction thiol -SH.

Les compositions de caoutchouc conformes à l'invention permettent ainsi de préparer des vulcanisats chargés de charge blanche présentant de manière générale un compromis de propriétés avantageux par rapport aux solutions connues de l'art antérieur.

Tableau 1

| Numéro de composition | 1 | 2 | 3 | 4 |
|---|---|---|---|---|
| SBR (1) | 75 | 75 | 75 | 75 |
| BR (2) | 25 | 25 | 25 | 25 |
| silice (3) | 80 | 80 | 80 | 80 |
| Si69 | | 6.4 | | |
| POS n°1 | | | 4 | |
| POS n°2 | | | | 4 |
| huile aromatique (total) | 34 | 34 | 34 | 34 |
| ZnO | 2.5 | 2.5 | 2.5 | 2.5 |
| acide stéarique | 2 | 2 | 2 | 2 |
| antioxydant (4) | 1.9 | 1.9 | 1.9 | 1.9 |
| DPG (5) | 1.5 | 1.5 | 1.5 | 1.5 |
| soufre | 1.1 | 1.1 | 1.1 | 1.1 |
| CBS (6) | 2 | 2 | 2 | 2 |

Tableau 1 (suite)

| Numéro de composition | 1 | 2 | 3 | 4 |
|---|---|---|---|---|
| (1) : SBR avec 59.5 % de 1-2 ; 23 % de trans ; 26.5 % de styrène; étendu avec 37.5 % d'huile (Tg : -29°C), exprimé en SBR sec.<br>(2) : BR avec 4.3 % de 1-2 ; 2.7 % de trans ; 93 % de cis 1-4 (Tg : -106 °C)<br>(3) : Silice Zeosil 1165 MP de la société Rhône-Poulenc<br>(4): N-1,3-diméthylbutyl N phényl-para-phenylènediamine<br>(5) : Diphénylguanidine<br>(6) : N-cyclohexyl-2-benzothiazyl-sulfénamide | | | | |

Tableau 2

| Numéro de composition | 1 | 2 | 3 | 4 |
|---|---|---|---|---|
| *Propriétés avant cuisson :* | | | | |
| Mooney (UM) | 81 | 53 | 56 | 58 |
| temps de grillage T5 (min) | 16 | >30 | >30 | >30 |
| *Propriétés après cuisson :* | | | | |
| M10 (MPa) | 7.07 | 3.91 | 3.82 | 4.12 |
| M100 (MPa) | 1.12 | 1.32 | 0.79 | 1.24 |
| M300 (MPa) | 0.69 | 1.62 | 0.59 | 1.45 |
| M300 / M100 | 0.62 | 1.23 | 0.75 | 1.17 |
| PH (%) | 44 | 26 | 37 | 28 |
| contrainte à la rupture (MPa) | 17 | 24 | 18 | 24 |
| allongement à la rupture (%) | 1020 | 700 | 1000 | 750 |

Tableau 3

| Numéro de composition | 5 | 6 | 7 |
|---|---|---|---|
| Caoutchouc naturel | 100 | 100 | 100 |
| silice (1) | 50 | 50 | 50 |
| Si69 | 3.2 | | |
| POS n°1 | | 3.2 | |
| POS N°2 | | | 3.2 |
| ZnO | 3 | 3 | 3 |
| acide stéarique | 2.5 | 2.5 | 2.5 |
| antioxydant (2) | 1.9 | 1.9 | 1.9 |
| soufre | 1.5 | 1.5 | 1.5 |
| CBS (3) | 1.8 | 1.8 | 1.8 |
| (1): Silice Zeosil 1165 MP de la société Rhône-Poulenc<br>(2): N-1,3-diméthylbutyl N phényl-para-phenylènediamine<br>(3): N-cyclohexyl-2-benzothiazyl-sulfénamide | | | |

Tableau 4:

| Numéro de composition | 5 | 6 | 7 |
|---|---|---|---|
| *Propriétés avant cuisson :* | | | |
| Mooney (UM) | 53 | 54 | 48 |

Tableau 4: (suite)

| Numéro de composition | 5 | 6 | 7 |
|---|---|---|---|
| temps de grillage T5 (min) | 24 | 27 | >30 |
| *Propriétés après cuisson :* | | | |
| M10 (MPa) | 3.89 | 3.74 | 4.19 |
| M100 (MPa) | 1.51 | 0.92 | 1.26 |
| M300 (MPa) | 1.58 | 0.71 | 1.18 |
| M300 / M100 | 1.05 | 0.77 | 0.94 |
| PH (%) | 18 | 23 | 21 |
| contrainte à la rupture (MPa) | 28 | 16 | 26 |
| allongement à la rupture (%) | 640 | 800 | 670 |

Tableau 5

| Numéro de composition | 8 | 9 |
|---|---|---|
| SBIR (1) | 100 | 100 |
| N234 | 30 | 30 |
| silice (2) | 50 | 50 |
| POS (3) | | 4 |
| huile aromatique | 35 | 35 |
| ZnO | 2.5 | 2.5 |
| acide stéarique | 2 | 2 |
| antioxydant (4) | 1.9 | 1.9 |
| DPG (5) | 1.5 | 1.5 |
| soufre | 1.1 | 1.1 |
| CBS(6) | 2 | 2 |

(1) : SBIR avec 20% de motifs butadiène (45% de 1-2 et 45% de trans), 44% de motifs isoprène (39% de cis, 24% de trans et 37% de 3-4) et 36% de motifs styrène (Tg : -23°C).

(2): silice Zeosil 1165MP de la société Rhône-Poulenc.

(3) : POS No4.

(4) : N-1,3-diméthylbutyl-N-phényl-para-phénylènediamine.

(5) : diphénylguanidine.

(6) : N-cyclohexyl-2-benzothiazyl-sulfénamide.

Tableau 6

| Numéro de composition | 8 | 9 |
|---|---|---|
| *Propriétés avant cuisson:* | | |
| Mooney (UM) | 62 | 37 |
| temps de grillage T5 (min) | 24 | 11 |
| *Cuisson à 150°C (min)* | 25 | 15 |
| M10 (MPa) | 4.67 | 4.47 |
| M100 (MPa) | 0.95 | 1.39 |
| M300 (MPa) | 0.82 | 1.62 |
| M300 / M100 | 0.86 | 1.17 |

Tableau 6 (suite)

| Numéro de composition | 8 | 9 |
|---|---|---|
| PH (%) | 46 | 36 |
| | | |
| contrainte à la rupture (MPa) | 16 | 19 |
| allongement à la rupture (%) | 860 | 750 |

Tableau 7

| Numéro de composition | 10 | 11 |
|---|---|---|
| SBR (1) | 100 | 100 |
| alumine (2) | 120 | 120 |
| POS (3) | | 4 |
| huile aromatique (total) | 37.5 | 37.5 |
| ZnO | 2.5 | 2.5 |
| acide stéarique | 2 | 2 |
| antioxydant (4) | 1.9 | 1.9 |
| soufre | 1.1 | 1.1 |
| CBS (5) | 2 | 2 |

(1) : SBR avec 78% de motifs butadiène (16% de 1-2 ; 70% de 1-4 trans; 14% 1-4 cis) et 22% de motifs styrène ; SBR étendu avec 37.5% d'huile, taux exprimé en SBR sec (Tg: -50°C).

(2): alumine γ type CR125 de la société Baïkowski (BET=105 $m^2/g$).

(3): POS No4.

(4): N-1,3-diméthylbutyl-N-phényl-para-phénylènediamine.

(5): N-cyclohexyl-2-benzothiazyl-sulfénamide.

Tableau 8

| Numéro de composition | 10 | 11 |
|---|---|---|
| *Propriétés avant cuisson :* | | |
| Mooney (UM) | 64 | 47 |
| temps de grillage T5 (min) | > 30 | 15 |
| z | | |
| *Cuisson à 150°C (min)* | 40 | 40 |
| | | |
| M10 (MPa) | 4.93 | 4.47 |
| M100 (MPa) | 1.06 | 1.50 |
| M300 (MPa) | 0.70 | 1.81 |
| M300 / M100 | 0.66 | 1.21 |
| | | |
| PH (%) | 35 | 29 |
| | | |
| contrainte à la rupture (MPa) | 19 | 23 |
| allongement à la rupture (%) | 970 | 600 |

**Revendications**

1. Composition de caoutchouc vulcanisable au soufre et destinée à la fabrication d'enveloppes de pneumatiques comportant au moins un élastomère diénique, une charge blanche à titre de charge renforçante, un agent de couplage (charge blanche/élastomère) porteur d'au moins deux fonctions Y et X, greffable d'une part sur la charge blanche au moyen de la fonction Y et d'autre part sur l'élastomère au moyen de la fonction X, **caractérisée en ce**

**que** ledit agent de couplage consiste en un polyorganosiloxane (POS) multifonctionnalisé comportant par molécule :

α) - d'une part au moins un premier motif siloxyle porteur sur l'atome de silicium d'au moins un radical (i) alkoxyle (fonction Y), linéaire ou ramifié, choisi parmi les alkoxyles en $C_1$ à $C_{15}$; et

β) - d'autre part au moins un second motif siloxyle porteur sur l'atome de silicium d'au moins un radical (2i) de formule générale Z-SH (fonction X), Z étant un groupement de liaison divalent, linéaire ou ramifié, comportant de préférence de 2 à 30 atomes de carbone.

**2.** Composition selon la revendication 1, dans laquelle le POS comporte au moins un troisième motif siloxyle fonctionnalisé porteur sur l'atome de silicium d'au moins un radical (3i) (fonction W) consistant en une chaîne hydrocarbonée éthyléniquement insaturée dont dérive la fonction X par une réaction de sulfuration, ladite chaîne éthyléniquement insaturée, liée à l'atome de silicium par une liaison Si-C, comportant de 2 à 30 atomes de carbone.

**3.** Composition selon les revendications 1 ou 2, dans laquelle le radical (i) est un alkoxyle en $C_1$-$C_6$, de préférence choisi parmi le méthoxyle, l'éthoxyle et le (iso)propoxyle, et le groupement Z est un alkylène en $C_2$-$C_{10}$, linéaire ou ramifié, ou un alkylène-cycloalkylène dont la partie alkylène a la même définition que ci-dessus et la partie cyclique comporte de 5 à 12 atomes de carbone.

**4.** Composition selon l'une quelconque des revendications 1 à 3, dans laquelle le POS multifonctionnalisé comprend, par molécule:

α) - d'une part, au moins un premier motif siloxyle fonctionnel de formule:

**(I)** $(R)_i\ (Y)_p\ Si\ (O)_{(4-i-p)/2}$

dans laquelle:

- i = 0, 1 ou 2 ; p = 1, 2 ou 3 ; avec la réserve que (i+p) = 1, 2 ou 3;
- R est un radical hydrocarboné monovalent choisi parmi les alkyles, linéaires ou ramifiés, en $C_1$-$C_6$, en particulier le méthyle, l'éthyle, le propyle, le butyle, et/ou parmi les aryles et en particulier le phényle, les radicaux R étant identiques ou différents quand i = 2;
- Y est un radical (i) tel que défini supra, les radicaux Y étant identiques ou différents quand p = 2 ou 3;

β) - d'autre part, au moins un second motif siloxyle fonctionnel de formule:

**(II)** $(R)_j\ (X)_q\ Si\ (O)_{(4-j-q)/2}$

dans laquelle:

- j = 0, 1 ou 2 ; q = 1, 2 ou 3 ; avec la réserve que (j+q) = 1, 2 ou 3;
- R répond à la même définition que celle donnée supra pour le substituant R du motif (I) ci-dessus et peut être identique ou différent de ce dernier;
- X est un radical (2i) tel que défini supra, les radicaux X étant identiques ou différents quand q = 2 ou 3;

γ) - et éventuellement au moins un troisième motif siloxyle fonctionnel, précurseur du motif (II) précédent, ayant pour formule:

**(III)** $(R)_k\ (W)_r\ Si\ (O)_{(4-k-r)/2}$

dans laquelle:

- k = 0, 1 ou 2 ; r = 1, 2 ou 3 ; avec la réserve que (k+r) = 1, 2 ou 3;
- R répond à la même définition que pour le substituant R du motif (II);

- W est un radical (3i) tel que défini supra, les radicaux W étant identiques ou différents quand r = 2 ou 3.

**5.** Composition selon la revendication 4, dans laquelle le POS multifonctionnalisé est un POS linéaire de formule (IV) incorporant le long de la chaîne polysiloxane au moins les motifs suivants dans les proportions suivantes:

$$\text{(IV)} \qquad -(R\ Y\ Si\ O)_a - (R\ W\ Si\ O)_b - (R\ X\ Si\ O)_c -,$$

R, Y, W et X étant identiques ou différents entre eux, et les nombres a, b et c (entiers ou fractionnaires) vérifiant les relations suivantes: a = 1 à 150 ; b = 0 à 85 ; c = I à 100 ; a+b+c = 2 à 300.

**6.** Composition selon la revendication 5, dans laquelle le POS multifonctionnalisé est un POS linéaire de formule (IV-1)

$$\textbf{(IV-1)} \qquad (A) - (R\ Y\ Si\ O)_a - (R\ W\ Si\ O)_b - (R\ X\ Si\ O)_c - (B),$$

dans laquelle les groupements terminaux A et B, porteurs ou non de fonctions Y, X ou W, sont choisis parmi les groupements suivants:

- en ce qui concerne A: $(R_{i'}\ Y_{p'}\ Si\ O\ -)$ et/ou $(R_{j'}\ X_{q'}\ Si\ O\ -)$ et/ou $(R_{k'}\ W_{r'}\ Si\ O\ -)$;
- en ce qui concerne B: $(-\ Si\ R_{i'}\ Y_{p'})$ et/ou $(-\ Si\ R_{j'}\ X_{q'})$ et/ou $(-\ Si\ R_{k'}\ W_{r'})$,

avec:

i' = 0, 1, 2 ou 3 ; p' = 0, 1, 2 ou 3 ; et la réserve que (i'+p') = 3;
j' = 0, 1, 2 ou 3 ; q' = 0, 1, 2 ou 3 ; et la réserve que (j'+q') = 3;
k' = 0, 1, 2 ou 3 ; r' = 0, 1, 2 ou 3 ; et la réserve que (k'+r') = 3,

R, Y, W et X étant identiques ou différents entre eux, respectivement, lorsqu'ils sont présents dans A et/ou B.

**7.** Composition selon les revendications 5 ou 6, dans laquelle R est le méthyle ou l'éthyle, Y est le méthoxyle ou l'éthoxyle, W est choisi parmi les radicaux (3i-1) et (3i-2) indiqués ci-après, le radical X correspondant qui en dérive étant référencé ci-dessous (2i-1) ou (2i-2):

(3i-1) : 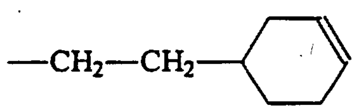

(3i-2) : 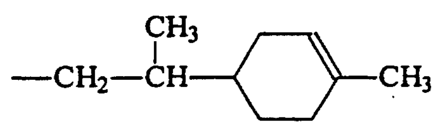

(2i-1) : 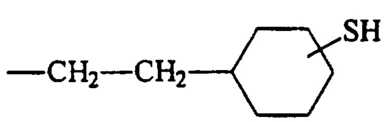

(2i-2) : 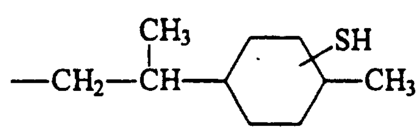

**8.** Composition selon la revendication 7, dans laquelle R est le méthyle, Y est l'éthoxyle, W est l'éthylène-cyclohexényle (radical 3i-1), Z est l'éthylène-cyclohexylène (radical 2i-1), a varie de 1 à 50, b de 0 à 30, c de 1 à 40, et (a+b+c) de 10 à 100.

**9.** Composition selon l'une quelconque des revendications 1 à 8 dans laquelle l'élastomère diénique est choisi dans le groupe constitué par les polybutadiènes, les polyisoprènes ou du caoutchouc naturel, les copolymères de butadiène-styrène, les copolymères de butadiène-isoprène, les copolymères d'isoprène-styrène, les copolymères de butadiène-styrène-isoprène, ou un mélange de deux ou plus de ces composés.

**10.** Composition selon la revendication 9, dans laquelle l'élastomère diénique est un copolymère de butadiène-styrène préparé en solution ayant une teneur en styrène comprise entre 20 et 30 % en poids, une teneur en liaisons vinyliques de la partie butadiénique comprise entre 15 % et 65 %, une teneur en liaisons trans-1,4 comprise entre 20 % et 75 % et une température de transition vitreuse comprise entre -20°C et -55°C, ce copolymère de butadiène-styrène étant éventuellement utilisé en mélange avec un polybutadiène possèdant de préférence plus de 90 % de liaisons cis-1,4.

**11.** Composition selon l'une quelconque des revendications 1 à 10 dans laquelle la charge blanche constitue la majorité de la charge renforçante totale.

**12.** Composition selon l'une quelconque des revendications 1 à 11 dans laquelle la charge blanche est majoritairement de la silice.

**13.** Composition selon l'une quelconque des revendications 1 à 11 dans laquelle la charge blanche est majoritairement de l'alumine.

**14.** Utilisation d'une composition de caoutchouc conforme à l'une quelconque des revendications 1 à 13, pour la fabrication de pneumatiques ou d'articles en caoutchouc destinés à de tels pneumatiques, ces articles étant choisis en particulier dans le groupe constitué par les bandes de roulement, les sous-couches, les flancs, les talons, les protecteurs, les chambres à air ou les gommes intérieures étanches pour pneu sans chambre.

**15.** Pneumatiques ou articles en caoutchouc destinés à de tels pneumatiques, comportant une composition de caoutchouc conforme à l'une quelconque des revendications 1 à 13.

**16.** Procédé pour assurer le couplage (charge blanche/élastomère) dans les compositions de caoutchouc diénique renforcées d'une charge blanche et destinées à la fabrication de pneumatiques, **caractérisé en ce qu'**on incorpore par mélangeage à ladite composition, avant sa vulcanisation, un polyorganosiloxane multifonctionnalisé comportant par molécule:

α) - d'une part au moins un premier motif siloxyle porteur sur l'atome de silicium d'au moins un radical (i) alkoxyle (fonction Y), linéaire ou ramifié, choisi parmi les alkoxyles en $C_1$ à $C_{15}$; et

β) - d'autre part au moins un second motif siloxyle porteur sur l'atome de silicium d'au moins un radical (2i) de formule générale Z-SH (fonction X), Z étant un groupement de liaison divalent, linéaire ou ramifié, comportant de préférence de 2 à 30 atomes de carbone.

**17.** Utilisation comme agent de couplage (charge blanche/élastomère) dans des compositions de caoutchouc diénique renforcées d'une charge blanche et destinées à la fabrication de pneumatiques, d'un polyorganosiloxane multifonctionnalisé comportant par molécule:

α) - d'une part au moins un premier motif siloxyle porteur sur l'atome de silicium d'au moins un radical (i) alkoxyle (fonction Y), linéaire ou ramifié, choisi parmi les alkoxyles en $C_1$ à $C_{15}$; et

β) - d'autre part au moins un second motif siloxyle porteur sur l'atome de silicium d'au moins un radical (2i) de formule générale Z-SH (fonction X), Z étant un groupement de liaison divalent, linéaire ou ramifié, comportant de préférence de 2 à 30 atomes de carbone.

## Patentansprüche

**1.** Mit Schwefel vulkanisierbare Kautschukzusammensetzung, die zur Herstellung von Luftreifen vorgesehen ist und die mindestens ein Dienelastomer, einen hellen Füllstoff als verstärkenden Füllstoff und ein Kupplungsmittel (heller Füllstoff / Elastomer) enthält, das mindestens zwei Funktionen Y und X enthält und mit Hilfe der Funktion Y auf den hellen Füllstoff und mit Hilfe der Funktion X auf das Elastomer gepfropft werden kann, **dadurch gekennzeichnet, daß** das Kupplungsmittel ein mehrfach funktionalisiertes Polyorganosiloxan (POS) ist, das pro Molekül enthält:

α) - mindestens eine erste Siloxyeinheit, die am Siliciumatom mindestens eine geradkettige oder verzweigte Alkoxygruppe (i) (Funktion Y) trägt, die unter den Alkoxygruppen mit 1 bis 15 Kohlenstoffatomen ausgewählt

ist; und

β) - mindestens eine zweite Siloxyeinheit, die am Siliciumatom mindestens eine Gruppe der allgemeinen Formel Z-SH (2i) (Funktion X) trägt, wobei Z eine geradkettige oder verzweigte zweiwertige Verbindungsgruppe ist, die vorzugsweise 2 bis 30 Kohlenstoffatome aufweist.

**2.** Zusammensetzung nach Anspruch 1, wobei das POS mindestens eine dritte funktionalisierte Siloxyeinheit enthält, die am Siliciumatom mindestens eine Gruppe (3i) (Funktion W) trägt, bei der es sich um eine ethylenisch ungesättigte Kohlenwasserstoffgruppe handelt, von der die Gruppe X durch Sulfidierung abgeleitet ist, wobei die ethylenisch ungesättigte Gruppe über eine Si-C-Bindung an das Siliciumatom gebunden ist und 2 bis 30 Kohlenstoffatome enthält.

**3.** Zusammensetzung nach den Ansprüchen 1 oder 2, wobei die Gruppe (i) eine $C_{1-6}$-Alkoxygruppe ist, die vorzugsweise unter Methoxy, Ethoxy und (Iso)propoxy ausgewählt ist, und die Gruppe Z eine geradkettig oder verzweigte $C_{2-10}$-Alkylengruppe oder eine Alkylen-cycloalkylengruppe ist, wobei der Alkylenanteil der oben angegebenen Definition entspricht und der cyclische Teil 5 bis 12 Kohlenstoffatome enthält.

**4.** Zusammensetzung nach einem der Ansprüche 1 bis 3, wobei das mehrfach funktionalisierte POS pro Molekül enthält:

α) - mindestens eine erste funktionelle Siloxyeinheit der Formel:

$$\text{(I)} \qquad (R)_i\,(Y)_p\,Si(O)_{(4-i-p)/2}$$

worin bedeuten:

- $i = 0$, 1 oder 2; $p = 1$, 2 oder 3; mit der Maßgabe, daß $(i + p) = 1$, 2 oder 3;
- R eine einwertige Kohlenwasserstoffgruppe, die unter den geradkettigen oder verzweigten $C_{1-6}$-Alkylgruppen, insbesondere Methyl, Ethyl, Propyl und Butyl, und/oder den Arylgruppen und insbesondere Phenyl ausgewählt ist, wobei die Gruppen R identisch oder voneinander verschieden sind, wenn $i = 2$;
- Y eine oben definierte Gruppe (i), wobei die Gruppen Y identisch oder voneinander verschieden sind, wenn $p = 2$ oder 3;

β) - mindestens eine zweite funktionelle Siloxyeinheit der Formel:

$$\text{(II)} \qquad (R)_j\,(X)_q\,Si(O)_{(4-j-q)/2},$$

worin bedeuten:

- $j = 0$, 1 oder 2; $q = 1$, 2 oder 3; mit der Maßgabe, daß $(j + q) = 1$, 2 oder 3;
- R die oben für den Substituenten R der Einheit (I) angegebenen Bedeutungen, wobei R mit dieser identisch oder von ihr verschieden sein kann;
- X eine oben definierte Gruppe (2i), wobei die Gruppen X identisch oder voneinander verschieden sind, wenn $q = 2$ oder 3;

γ) - und gegebenenfalls mindestens eine dritte funktionelle Siloxyeinheit, die ein Precursor der oben genannten Einheit (II) ist, mit der Formel:

$$\text{(III)} \qquad (R)_k\,(W)_r\,Si(O)_{(4-k-r)/2},$$

worin bedeuten:

- $k = 0$, 1 oder 2; $r = 1$, 2 oder 3; mit der Maßgabe, daß $(k + r) = 1$, 2 oder 3;
- R die für den Substituenten R der Einheit (II) angegebenen Bedeutungen;
- W eine oben definierte Gruppe (3i), wobei die Gruppen W identisch oder voneinander verschieden sind, wenn $r = 2$ oder 3.

**5.** Zusammensetzung nach Anspruch 4, wobei das mehrfach funktionalisierte POS ein geradkettiges POS der Formel (IV) ist, das in der Polysiloxankette zumindest die folgenden Einheiten in den folgenden Mengenanteilen enthält:

$$\text{(IV)} \qquad -(R\,Y\,Si\,O)_a - (R\,W\,Si\,O)_b - (R\,X\,Si\,O)_c-,$$

wobei R, Y, W und X identisch oder voneinander verschieden sind und die Indizes a, b und c (ganze Zahlen oder Brüche) die folgenden Beziehungen erfüllen: a = 1 bis 150; b = 0 bis 85; c = 1 bis 100; a + b + c = 2 bis 300.

**6.** Zusammensetzung nach Anspruch 5, wobei das mehrfach funktionalisierte POS ein geradkettiges POS der Formel (IV-1) ist:

$$\text{(IV-1)} \qquad (A) - (R\,Y\,Si\,O)_a - (R\,W\,Si\,O)_b - (R\,X\,Si\,O)_c - (B),$$

worin die Endgruppen A und B, die Gruppen Y, X oder W tragen oder keine Gruppen Y, X oder W tragen, unter den folgenden Gruppen ausgewählt sind:

- A: ($R_{i'}$ $Y_{p'}$ SiO-) und/oder ($R_{j'}$ $X_{q'}$ SiO-) und/oder ($R_{k'}$ $W_{r'}$ SiO-);
- B: (-Si $R_{i'}$ $Y_{p'}$) und/oder (-Si $R_{j'}$ $X_{q'}$) und/oder (-Si $R_{k'}$ $W_{r'}$),

mit:

i' = 0, 1, 2 oder 3; p' = 0, 1, 2 oder 3;
mit der Maßgabe, daß (i' + p') = 3;
j' = 0, 1, 2 oder 3; q' = 0, 1, 2 oder 3;
mit der Maßgabe, daß (j' + q') = 3;
k' = 0, 1, 2 oder 3; r' = 0, 1, 2 oder 3;
mit der Maßgabe, daß (k' + r') = 3,

wobei die Gruppen R, Y, W und X identisch oder voneinander verschieden sind, wenn sie in A und/oder B vorliegen.

**7.** Zusammensetzung nach den Ansprüchen 5 oder 6, wobei R Methyl oder Ethyl bedeutet, Y Methoxy oder Ethoxy ist, die Gruppe W unter den nachfolgend angegebenen Gruppen (3i-1) und (3i-2) ausgewählt ist, wobei die davon abgeleitete, entsprechende Gruppe X den unten angegebenen Referenzen (2i-1) oder (2i-2) entspricht:

(3i-1) : 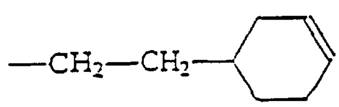

(3i-2) : 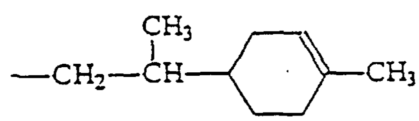

(2i-1) : 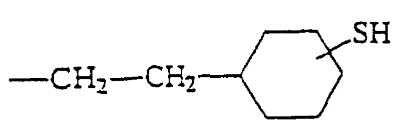

(2i-2) : 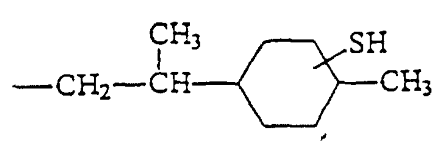

**8.** Zusammensetzung nach Anspruch 7, worin bedeuten: R Methyl, Y Ethoxy, W Ethylen-cyclohexenyl (Gruppe 3i-1), Z Ethylencyclohexylen (Gruppe 2i-1), a 1 bis 50, b 0 bis 30, c 1 bis 40 und a + b + c 10 bis 100.

**9.** Zusammensetzung nach einem der Ansprüche 1 bis 8, wobei das Dienelastomer unter den Polybutadienen, Polyisoprenen oder Naturkautschuk, Butadien-Styrol-Copolymeren, Butadien-Isopren-Copolymeren, Isopren-Styrol-Copolymeren, Butadien-Styrol-Isopren-Copolymeren oder Gemischen von zwei oder mehreren dieser Verbindungen ausgewählt ist.

**10.** Zusammensetzung nach Anspruch 9, wobei das Dienelastomer ein Butadien-Styrol-Copolymer ist, das in Lösung hergestellt wird und einen Styrolgehalt von 20 bis 30 Gew.-%, einen Gehalt an Vinylbindungen des Polybutadienanteils im Bereich von 15 bis 65 %, einen Gehalt an trans-1,4-Bindungen im Bereich von 20 bis 75 % und eine Glasübergangstemperatur von -20 bis -55 °C aufweist, wobei dieses Butadien-Styrol-Polymer gegebenenfalls im Gemisch mit einem Polybutadien verwendet wird, das vorzugsweise mehr als 90 % cis-1,4-Bindungen aufweist.

**11.** Zusammensetzung nach einem der Ansprüche 1 bis 10, wobei der helle Füllstoff die Mehrheit des gesamten verstärkenden Füllstoffs ausmacht.

**12.** Zusammensetzung nach einem der Ansprüche 1 bis 11, wobei der helle Füllstoff hauptsächlich aus Kieselsäure besteht.

**13.** Zusammensetzung nach einem der Ansprüche 1 bis 11, wobei der helle Füllstoff hauptsächlich aus Aluminiumoxid besteht.

**14.** Verwendung einer Kautschukzusammensetzung nach einem der Ansprüche 1 bis 13 zur Herstellung von Luftreifen oder Gegenständen aus Kautschuk, die für diese Luftreifen vorgesehen sind, wobei die Gegenstände insbesondere unter Laufstreifen, Unterschichten, Seitenprofilen, Reifenwülsten, Protektoren, Schläuchen oder Innenseelen für schlauchlose Reifen ausgewählt sind.

**15.** Luftreifen oder Gegenstände aus Kautschuk, die für Luftreifen vorgesehen sind, die eine Kautschukzusammensetzung nach einem der Ansprüche 1 bis 13 enthalten.

**16.** Verfahren zur Gewährleistung der Kupplung (heller Füllstoff /Elastomer) in Dienkautschukmischungen, die mit einem hellen Füllstoff verstärkt sind und zur die Herstellung von Luftreifen vorgesehen sind, **dadurch gekennzeichnet, daß** in die Zusammensetzung vor ihrer Vulkanisation durch Mischen ein mehrfach funktionalisiertes Polyorganosiloxan eingearbeitet wird, das pro Molekül enthält:

α) - mindestens eine erste Siloxyeinheit, die am Siliciumatom mindestens eine geradkettige oder verzweigte Alkoxygruppe (i) (Funktion Y) enthält, die unter den Alkoxygruppen mit 1 bis 15 Kohlenstoffatomen ausgewählt ist; und
β) - mindestens eine zweite Siloxyeinheit, die am Siliciumatom mindestens eine Gruppe der allgemeinen Formel Z-SH (2i) (Funktion X) trägt, wobei Z eine geradkettige oder verzweigte zweiwertige Verbindungsgruppe ist, die vorzugsweise 2 bis 30 Kohlenstoffatome enthält.

**17.** Verwendung eines mehrfach funktionalisierten Polyorganosiloxans, das pro Molekül enthält:

α) - mindestens eine erste Siloxyeinheit, die am Siliciumatom mindestens eine geradkettige oder verzweigte Alkoxygruppe (i) (Funktion Y) enthält, die unter den Alkoxygruppen mit 1 bis 15 Kohlenstoffatomen ausgewählt ist; und
β) - mindestens eine zweite Siloxyeinheit, die am Siliciumatom mindestens eine Gruppe der allgemeinen Formel Z-SH (2i) (Funktion X) trägt, wobei Z eine geradkettige oder verzweigte zweiwertige Verbindungsgruppe ist, die vorzugsweise 2 bis 30 Kohlenstoffatome enthält,

als Kupplungsmittel (heller Füllstoff / Elastomer) in Dienkautschukmischungen, die mit einem hellen Füllstoff verstärkt sind und die zur Herstellung von Luftreifen vorgesehen sind.

## Claims

**1.** A sulphur-vulcanisable rubber composition intended for the manufacture of tyres, comprising at least one diene elastomer, a white filler as reinforcing filler, and a coupling agent (white filler/elastomer) bearing at least two functions Y and X, that can be grafted on the one hand to the white filler by means of the Y function and on the other hand to the elastomer by means of the X function, **characterised in that** said coupling agent consists of a multifunctionalised polyorganosiloxane (POS) comprising, per molecule:

α) - firstly at least a first siloxyl unit bearing on the silicon atom at least one straight-chain or branched alkoxy radical (i) (Y function), selected from among the $C_1$ to $C_{15}$ alkoxy, and

β) - secondly at least a second siloxyl unit bearing on the silicon atom at least one radical (2i) with general formula Z-SH (the X function), Z being a straight-chain or branched divalent binding group preferably comprising from 2 to 30 carbon atoms.

**2.** A composition according to Claim 1, in which the POS comprises at least one third functionalised siloxyl unit bearing on the silicon atom at least one radical (3i) (W function) consisting of an ethylenically unsaturated hydrocarbon chain from which the X function is derived by a sulphurisation reaction, said ethylenically unsaturated chain, linked to the silicon atom by an Si-C bond, comprising 2 to 30 carbon atoms.

**3.** A composition according to Claims 1 or 2, in which the radical (i) is a $C_1$-$C_6$ alkoxy, preferably selected from among methoxy, ethoxy and (iso)propoxy, and the group Z is a straight-chain or branched $C_2$-$C_{10}$ alkylene, or an alkylene-cycloalkylene, the alkylene part of which has the same definition as above, and the cyclic part of which comprises 5 to 12 carbon atoms.

**4.** A composition according to any one of Claims 1 to 3, in which the multifunctionalised POS comprises, per molecule:

α) firstly, at least one first functional siloxyl unit of the formula:

$$(I) \qquad (R)_i(Y)_pSi(O)_{(4-i-p)/2}$$

in which :

- i = 0, 1 or 2; p = 1, 2 or 3; with the proviso that (i+p) = 1, 2 or 3;
- R is a monovalent hydrocarbon radical selected from among straight-chain or branched $C_1$-$C_6$ alkyls, in particular methyl, ethyl, propyl, butyl, and/or from among the aryls and particularly phenyl, the radicals R being identical or different when i = 2;
- Y is a radical (i) as defined above, the radicals Y being identical or different when p = 2 or 3;

β) secondly, at least a second functional siloxyl unit of the formula:

$$(II) \qquad (R)_j(X)_qSi(O)_{(4-j-q)/2}$$

in which:

- j = 0, 1 or 2; q = 1, 2 or 3; with the proviso that (j+q) = 1, 2 or 3;
- R has the same definition as given above for the substituent R of the unit (I) above, and may be identical to or different from the latter;
- X is a radical (2i) as defined above, the radicals X being identical or different when q = 2 or 3;

γ) and possibly at least a third functional siloxyl unit, a precursor of the preceding unit (II), of the formula:

$$(III) \qquad (R)_k(W)_rSi(O)_{(4-k-r)/2}$$

in which:

- k = 0, 1 or 2; r = 1, 2 or 3; with the proviso that (k+r) = 1, 2 or 3;
- R has the same definition as for the substituent R of the unit (II);
- W is a radical (3i) as defined above, the radicals W being identical or different when r = 2 or 3.

**5.** A composition according to Claim 4, in which the multifunctionalised POS is a straight-chain POS of formula (IV) incorporating along the polysiloxane chain at least the following units in the following proportions:

$$(IV) \qquad -(R\ Y\ Si\ O)_a - (R\ W\ Si\ O)_b - (R\ X\ Si\ O)_c -,$$

R, Y, W and X being identical or different, respectively, and the numbers a, b and c (integers or fractions) satisfying the following conditions: a = 1 to 150; b = 0 to 85; c = I to 100; a+b+c = 2 to 300.

**6.** A composition according to Claim 5, in which the multifunctionalised POS is a straight-chain POS of the formula (IV-1):

$$\text{(IV-1)} \qquad (A) - (R\,Y\,Si\,O)_a - (R\,W\,Si\,O)_b - (R\,X\,Si\,O)_c - (B),$$

in which the end groups A and B, which may or may not bear functions Y, X or W, are selected from among the following groups:

for A : ($R_{i'}$ $Y_{p'}$ Si O -) and/or ($R_{j'}$ $X_{q'}$ Si O -) and/or ($R_{k'}$ $W_{r'}$ Si O -);
for B : (- Si $R_{i'}$ $Y_{p'}$) and/or (- Si $R_{j'}$ $X_{q'}$) and/or (- Si $R_{k'}$ $W_{r'}$),

with:

i' = 0, 1, 2 or 3; p' = 0, 1, 2 or 3; and the proviso that (i'+p') = 3;
j' = 0, 1, 2 or 3; q' = 0, 1, 2 or 3; and the proviso that (j'+q') = 3;
k' = 0, 1, 2 or 3; r' = 0, 1, 2 or 3; and the proviso that (k'+r') = 3;

R, Y, W and X being identical or different, respectively, when present in A and/or B.

**7.** A composition according to Claims 5 or 6, in which R is methyl or ethyl, Y is methoxy or ethoxy, W is selected from among the radicals (3i-1) and (3i-2) indicated below, the corresponding radical X which derives therefrom being referenced (2i-1) or (2i-2) below:

(3i-1) : 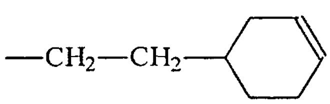 (3i-2) : 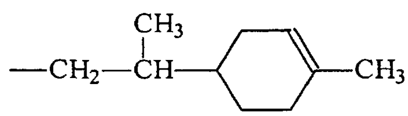

(2i-1) : 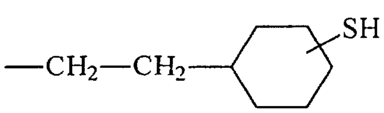 (2i-2) : 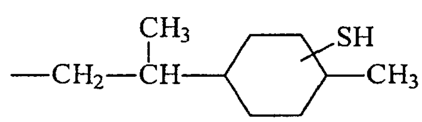

**8.** A composition according to Claim 7, in which R is methyl, Y is ethoxy, W is ethylene-cyclohexenyl (radical 3i-1), Z is ethylene-cyclohexylene (radical 2i-1), a varies from 1 to 50, b from 0 to 30, c from 1 to 40, and a+b+c from 10 to 100.

**9.** A composition according to any one of Claims 1 to 8, in which the diene elastomer is selected from the group consisting of the polybutadienes, the polyisoprenes or natural rubber, butadiene-styrene copolymers, butadiene-isoprene copolymers, isoprene-styrene copolymers, butadiene-styrene-isoprene copolymers, or a mixture of two or more of these compounds.

**10.** A composition according to Claim 9, in which the diene elastomer is a butadiene-styrene copolymer prepared in solution having a styrene content of between 20% and 30% by weight, a content of vinyl bonds of the butadiene part of between 15% and 65%, a content of trans-1,4 bonds of between 20% and 75%, and a glass transition temperature of between -20°C and -55°C, this butadiene-styrene copolymer possibly being used in a mixture with a polybutadiene having preferably more than 90% cis-1,4 bonds.

**11.** A composition according to any one of Claims 1 to 10, in which the white filler constitutes the majority of the total reinforcing filler.

**12.** A composition according to any one of Claims 1 to 11, in which the white filler consists of silica as major component.

**13.** A composition according to any one of Claims I to 11, in which the white filler consists of alumina as majority component.

**14.** The use of a rubber composition according to any one of Claims I to 13 for the manufacture of tyres or of rubber articles intended for such tyres, these articles being selected in particular from among the group comprising treads, underlayers, sidewalls, beads, protectors, inner tubes or airtight internal rubbers for tubeless tyres.

**15.** Tyres or rubber articles intended for such tyres, comprising a rubber composition according to any one of Claims I to 13.

**16.** A process for ensuring the coupling (white filler/elastomer) in diene rubber compositions reinforced by a white filler and intended for the manufacture of tyres, **characterised in that** a multifunctionalised polyorganosiloxane comprising per molecule:

α) - firstly at least a first siloxyl unit bearing on the silicon atom at least one straight-chain or branched alkoxy radical (i) (Y function), selected from among the $C_1$ to $C_{15}$ alkoxy; and

β) - secondly at least a second siloxyl unit bearing on the silicon atom at least one radical (2i) with general formula Z-SH (X function), Z being a straight-chain or branched divalent binding group preferably comprising from 2 to 30 carbon atoms,

is incorporated with said composition by mixing before the vulcanisation thereof.

**17.** The use as coupling agent (white filler/elastomer), in diene rubber compositions reinforced by a white filler and intended for the manufacture of tyres, of a multifunctionalised polyorganosiloxane comprising per molecule:

α) - firstly at least a first siloxyl unit bearing on the silicon atom at least one straight or branched alkoxy radical (i) (Y function), selected from among the $C_1$ to $C_{15}$ alkoxy; and

β) - secondly at least a second siloxyl unit bearing on the silicon atom at least one radical (2i) with general formula Z-SH (X function), Z being a straight-chain or branched divalent binding group preferably comprising from 2 to 30 carbon atoms.

**Figure 1 :**

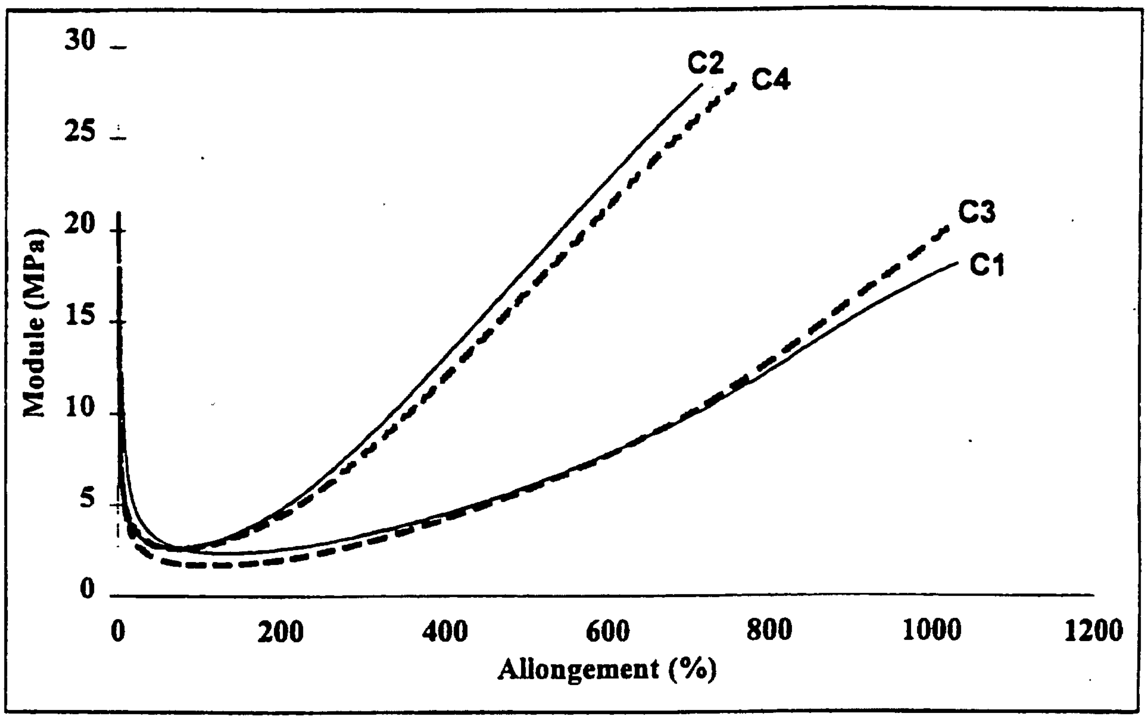


**Figure 2 :**